# EUROPÄISCHE PATENTSCHRIFT

(11) **EP 3 642 390 B1**
(45) Veröffentlichungstag und Bekanntmachung des Hinweises auf die Patenterteilung: **06.07.2022**
(21) Anmeldenummer: 18729089.5
(22) Anmeldetag: 30.05.2018
(51) Int. Cl.: C23F 13/22, G01N 17/02

(54) **VERFAHREN ZUR ÜBERWACHUNG EINES ELEKTRISCH LEITFÄHIGEN UND DURCH KATHODISCHEN KORROSIONSSCHUTZ GESCHÜTZTEN OBJEKTS**
METHOD FOR MONITORING AN ELECTRICALLY CONDUCTIVE OBJECT WHICH IS CATHODICALLY PROTECTED AGAINST CORROSION
PROCÉDÉ POUR SURVEILLER UN OBJET ÉLECTROCONDUCTEUR ET PROTÉGÉ DE LA CORROSION PAR PROTECTION CATHODIQUE

(30) Priorität: 21.06.2017 DE 102017113633
(43) Veröffentlichungstag der Anmeldung: 29.04.2020
(73) Patentinhaber: Steffel KKS GmbH, 29331 Lachendorf (DE)
(72) Erfinder: TIETZ, Raimund, 38268 Lengede (DE)
(74) Vertreter: Holz, Christian
(86) Internationale Anmeldenummer: PCT/EP2018/064309
(87) Internationale Veröffentlichungsnummer: WO 2018/234005

(56) Entgegenhaltungen:
- DE-T2- 69 828 919
- DE-U1-202005 010 084
- JP-A- 2010 190 658
- ANDREA BRENNA ET AL: "Cathodic protection monitoring of buried carbon steel pipeline: measurement and interpretation of instant-off potential", CORROSION ENGINEERING, SCIENCE AND TECHNOLOGY, Bd. 52, Nr. 4, 9. Februar 2017 (2017-02-09), Seiten 253-260, XP055504851, GB ISSN: 1478-422X, DOI: 10.1080/1478422X.2016.1262096

## Beschreibung

Die vorliegende Erfindung betrifft ein Verfahren zur Überwachung eines elektrisch leitfähigen und durch kathodischen Korrosionsschutz geschützten Objekts gemäß dem Patentanspruch 1 sowie eine Überwachungsvorrichtung zur Durchführung eines derartigen Verfahrens gemäß des Patentanspruchs 17.

Als Korrosionsschutz werden üblicherweise Maßnahmen zur Vermeidung von Schäden bezeichnet, welche durch Korrosion an metallischen Bauteilen verursacht werden können. Derartige Maßnahmen werden beispielsweise bei fluidführenden Leitungen wie z.B. Pipelines und anderen Einrichtungen der Erdöl- und bzw. oder Erdgasindustrie angewendet.

Da eine absolute Korrosionsbeständigkeit üblicherweise nicht erreicht werden kann, zielen die Schutzmaßnahmen im Allgemeinen darauf ab, die Geschwindigkeit des korrosiven Angriffs so weit zu verringern, dass eine Schädigung des Bauteils während seiner Lebensdauer vermieden werden kann. Hierbei wird zwischen aktivem und passivem Korrosionsschutz unterschieden.

Der passive Korrosionsschutz umfasst alle Maßnahmen, welche eine gegen korrosive Medien abschirmende Wirkung erzielen können. Dies kann z.B. durch einen geeigneten Überzug oder eine Beschichtung des Werkstoffes sowie durch konstruktive Maßnahmen wie z.B. die Vermeidung von Wasseransammlungen, durch Überdachungen und dergleichen erreicht werden. Große und lange Pipelines aus Stahl für den Wassertransport werden vorzugsweise mit einer Innenbeschichtung aus Zementmörtel als Korrosionsschutz ausgekleidet. Durch die Zumischung geeigneter Kunststoffe kann die Korrosionsfestigkeit weiter verbessert werden. Auch galvanotechnisch oder chemisch erzeugte, metallische Deckschichten aus z.B. Zinn, Gold, Nickel, Kupfer, Chrom, Zink oder Legierungsschichten wie Nickel-Phosphor (chemisch Nickel) oder Zink-Nickel können einen Korrosionsschutz bewirken. Ebenfalls findet die Feuerverzinkung als Schmelztauchverfahren breite Anwendung.

Im Bereich des aktiven Korrosionsschutzes lässt sich zwischen dem aktiven kathodischen Korrosionsschutz mit Fremdstrom und dem aktiven kathodischen Korrosionsschutz ohne Fremdstrom unterscheiden.

Mit dem aktiven Korrosionsschutz ohne Fremdstrom verfolgt man das Ziel, ein Metall, welches häufig in Kontakt mit z.B. Wasser kommen kann, vor Rost zu schützen. Hierzu bedient man sich eines unedleren Stoffes, der für das Metall geopfert wird. Hierzu wird ein Stromkreis aufgebaut, der aus der Redoxreaktion der Oxidation dieser Opferanode gespeist wird. Der Strom von wenigen Milliampere wird dabei über einen einfachen Stromkreis geführt.

Bei dem aktiven Korrosionsschutz mit Fremdstrom werden Fremdstrom und Fremdstrom-Anoden verwendet. Bei Erdöl-Pipelines werden dazu z. B. in Abständen von einigen Kilometern in einigen hundert Metern Abstand quer zur Pipeline Elektroden im Boden versenkt, die mit einer Gegenspannung gespeist werden. Der andere Pol liegt an der Pipeline an, so dass dieses Spannungsgefälle genau das galvanische Element aus Boden und Metallleitung ausgleicht, was sich konkret in der Größenordnung von wenigen Volt bewegt. Da dies von der chemischen Zusammensetzung des Bodens abhängt, muss dieser untersucht und die eingespeiste Gegenspannung an die örtlichen Gegebenheiten angepasst werden.

Eine Einrichtung zum aktiven Korrosionsschutz mit Fremdstrom kann dauerhaft stationär betrieben werden, um z.B. eine Erdöl-Pipeline oder eine andere fluidführende Leitung zu schützen. Dabei kann es für den Betreiber dieser Einrichtung von Interesse sein zu überprüfen, ob die Einrichtung ihren Betrieb ausführt. Hierzu kann eine Überwachung der Einrichtung zum aktiven Korrosionsschutz mit Fremdstrom durch regelmäßige wie z.B. tägliche oder stündliche Messungen etc. erfolgen.

Es kann jedoch auch für den Betreiber dieser Einrichtung von Interesse sein zu überprüfen, ob der Betrieb der Einrichtung aktuell gestört wird. Eine mögliche Störung kann z.B. durch Bauarbeiten in der Nähe der Erdöl-Pipeline eintreten, insbesondere durch den Kontakt z.B. eines Baufahrzeugs mit der Pipeline.

Die EP 1 728 895 B1 beschreibt ein Überwachungsverfahren zum Feststellen einer Annäherung eines leitfähigen Körpers an eine mit einem kathodischen Schutzstrom beaufschlagte Fluid-Transportpipeline. Das Feststellen erfolgt dadurch, dass zu vorgegebenen Zeitpunkten an wenigstens zwei Messstellen an der Fluid-Transportpipeline jeweils ein für den an der Messstelle entlang der Fluid-Transportpipeline fließenden Schutzstrom repräsentativer Messwert erfasst wird, dass für jeden vorgegebenen Zeitpunkt aus den Messwerten jeweils zweier beabstandeter Messstellen ein für die Differenz der an den Messstellen entlang der Pipeline fließenden Schutzströme repräsentativer Differenzwert gebildet wird, und dass aus der zeitlichen Änderung der für die vorgegebenen Zeitpunkte gebildeten Differenzwerte wenigstens ein Wert abgeleitet wird, der eine Annäherung eines leitfähigen Körpers an die Fluid-Transportpipeline zwischen den beiden Messstellen anzeigen kann. Mit diesem Überwachungsverfahren kann ein Kontakt beispielsweise zwischen einem leitfähigen Baufahrzeug und der leitfähigen Fluid-Transportleitung sofort erkannt werden. Durch die Bildung der für die Differenz der an den Messstellen entlang der Pipeline fließenden Schutzströme repräsentativen Differenzwerte gelingt es, Störeinflüsse auf die Messwerterfassung zu reduzieren.

Die DE 10 2010 021 992 B4 beschreibt ein Verfahren zur Erkennung geringfügiger Änderungen des elektrischen Umhüllungswiderstandes von in Erde oder in einem Gewässer verlegten und kathodisch vor Korrosion geschützten Objekten aus Stahl. Das Verfahren weist die Schritte auf, dass an wenigstens einer Messstelle innerhalb eines Schutzbereiches des Objekts mit Hilfe eines Messgerätes das Einschaltpotential Uₑᵢₙ kontinuierlich ermittelt wird, wobei die genannten Messwerte mit einer zeitlichen Auflösung von wenigstens 1 MHz aufgenommen werden und wobei aus der zeitlichen Änderung des Einschaltpotentials Uₑᵢₙ eine geringfügige Änderung des elektrischen Umhüllungswiderstandes des Objekts erkannt wird. Zur Durchführung des Verfahrens muss der Umhüllungswiderstand des zu schützenden Objekts selbst nicht zwingend gemessen oder bestimmt werden. Es kann vielmehr aus einer Änderung des Einschaltpotentials Uₑᵢₙ auf die Änderung des Umhüllungswiderstandes als Folge von Beschädigungen beispielsweise durch einen Bagger geschlossen werden.

Die EP 2 995 930 A1 beschreibt ein Verfahren zur Ermittlung eines Zustands eines elektrisch leitfähigen und durch kathodischen Korrosionsschutz geschützten Objekts, insbesondere einer Stahlrohrleitung. Das Verfahren weist die Schritte auf, dass ein elektrisches Prüfsignal bezüglich des Objekts gemessen und dass der Zustand des Objekts in Abhängigkeit von einem zeitlichen Verlauf eines Frequenzspektrums des elektrischen Prüfsignals ermittelt wird. Insbesondere wird der Zustand des Objekts in Abhängigkeit von einem zeitlichen Verlauf einer Amplitude im Bereich einer Prüffrequenz des Frequenzspektrums des elektrischen Prüfsignals ermittelt, vorzugsweise in Abhängigkeit von einem Überschreiten eines Amplitudenschwellwerts durch die Amplitude des Prüfsignals.

Durch das Messen eines elektrischen Prüfsignals bezüglich des Objekts und durch das Ermitteln eines Zustands des Objekts in Abhängigkeit von einem zeitlichen Verlauf eines Frequenzspektrums des elektrischen Prüfsignals soll die Erkennung und Ermittlung eines bestimmten Zustands des elektrisch leitfähigen und durch kathodischen Korrosionsschutz geschützten Objekts verbessert werden. Insbesondere soll durch die Beobachtung des Frequenzspektrums über der Zeit eine frequenzspezifische Eigenschaft beobachtet werden können, ohne dass Störsignale einen negativen Einfluss auf die Zustandsermittlung haben. Vorteilhafterweise sollen dadurch die Zustandsermittlung und der Betrieb des Objekts, insbesondere einer Stahlrohrleitung, sicherer werden. Insbesondere der Problemkomplex eines Baggerangriffs auf ein Stahlrohr, was zur Zerstörung des Stahlrohrs und zur Gefährdung von Mensch und Umwelt führen kann, soll wirksam erkannt und entsprechend sollen Sicherheitsmaßnahmen umgesetzt werden können.

Nachteilig ist bei den zuvor beschriebenen bekannten Verfahren, dass diese als Ergebnis auf die Erkennung eines Anstiegs eines Messwertes über einen gewissen Zeitraum oder auf die Erkennung einer Veränderung eines zusätzlich eingespeisten hochfrequenten Prüfsignals setzen. Diese Ergebnisse sind bei den zu überwachenden Szenarien von unerwünschten Kontakten wie z.B. eines Kontakts eines Baggers mit z.B. einer Pipeline unter Umständen nicht besonders ausgeprägt und bzw. oder von lediglich kurzer Natur. Dieser Anstieg eines Messwertes bzw. diese Veränderung eines Prüfsignals können daher schwierig und nicht zuverlässig zu erkennen sein. Dies kann insbesondere für den Fall gelten, dass der Kontakt nur kurzfristig auftritt und vorerst keine weitere Veränderung des Schutzstroms hervorruft.

Nachteilig ist dies insbesondere vor dem Hintergrund, dass es für einen Betreiber z.B. einer Pipeline von Nutzen sein kann, neben unabsichtlichen unerwünschten Kontakten wie z.B. dem Kontakt eines Baggers mit z.B. einer Pipeline auch vorsätzlich ausgeführte unerwünschte Kontakte wie z.B. einen Sabotageakt oder einen terroristischen Angriff als unerlaubten Trasseneingriff erkennen zu können. Da ein derartiger vorsätzlich ausgeführter unerwünschter Kontakt über einen kürzeren Zeitraum und bzw. oder mit einer geringeren Kontaktfläche wie z.B. mit einem Bohrgerät anstelle z.B. einer Baggerschaufel auftreten kann, muss dieser Kontakt dennoch zuverlässig und möglichst unverzüglich erkannt werden können, um Schutz- und bzw. oder Abwehrmaßnahmen einleiten zu können. Eine Erkennung derartiger unerwünschter Kontakte ist mit den bekannten zuvor beschriebenen Verfahren nur unzureichend bis gar nicht möglich.

Nachteilig ist bei den bekannten zuvor beschriebenen Verfahren auch, dass gar keine qualitative Beurteilung des unerwünschten Kontakts erfolgen kann. Dies kann jedoch bei einem vorsätzlich ausgeführten unerwünschten Kontakt wie z.B. bei einem Sabotageakt oder bei einem terroristischen Angriff wünschenswert bis erforderlich sein, um zwischen verschiedenen Arten von unerwünschten Kontakten unterscheiden und hierauf abgestimmte Schutz- und bzw. oder Abwehrmaßnahmen möglichst schnell einleiten zu können. Insbesondere kann dies dazu führen, dass Abwehrmaßnahmen greifen können, bevor an der Pipeline ein Schaden angerichtet werden konnte.

Nachteilig ist bei den bekannten zuvor beschriebenen Verfahren ferner, dass beim Einsatz von geregelten Gleichrichtern für den Korrosionsschutz, die ein Potential oder den Strom ausregeln, durch Eingriffe der Regelung Fehlalarmierungen der Überwachungssysteme ausgelöst werden können.

Nachteilig ist bei den bekannten zuvor beschriebenen Verfahren des Weiteren, dass die fluidführenden Leitungen wie z.B. Pipelines, welche durch hohe Wechselspannungen z.B. von Hochspannungstrassen oder dem Bahnverkehr sowie durch Streustrombeeinflussungen z.B. von Gleichstrombahnen beeinflusst sind, von den bekannten zuvor beschriebenen Verfahren schwer oder gar nicht überwacht werden können. Dies kann insbesondere dann der Fall sein, falls ein geregelter Gleichrichter eingesetzt wird, um derartige Beeinflussungen zu kompensieren.

Die DE 698 28 919 T2 beschreibt ein Verfahren zur Beurteilung der Adäquanz einer kathodischen Schutzanlage für Rohrleitungen unter Verwendung einer Stahlsonde und einer gesättigten Kupfer/Kupfersulfat-Referenzelektrode, die tief im Erdboden in der Nähe der Rohrleitung installiert ist, wobei die Stahlsonde über einen zyklisch betriebenen Ein-/Aus-Schalter elektrisch mit der Rohrleitung verbunden ist, wobei ein "Ein"-Potenzial zwischen der Stahlsonde und der Referenzelektrode über ein Zeitintervall des eingeschalteten Zustands des Schalters hinweg abgetastet und gemessen wird, und ein "Aus"-Potenzial zwischen der Stahlsonde und der Referenz-Elektrode über ein Zeitintervall des ausgeschalteten Zustands des Schalters hinweg abgetastet und gemessen wird, wobei Sondenstromdichten zwischen der Stahlsonde und der Rohrleitung gemessen werden, worin Messungen von zwischen Stahlsonde und Rohrleitung fließenden Gleichstrom- sowie Wechselstromdichten des Sondenstroms gleichzeitig mit der Messung des "Ein"-Potenzials vorgenommen werden, und über das selbe Zeitintervall hinweg, die Gleichstromdichten des Sondenstroms mittels eines Tiefpassfilters erhalten werden, die Wechselstromdichten des Sondenstroms mittels eines Bandpassfilters erhalten werden, das "Aus"-Potenzial durch Mittelung des Potenzials über ein konstantes Zeitintervall hinweg nach der Unterbrechung der Verbindung zwischen der Stahlsonde und einer Rohrleitung erhalten wird, und worin das "Aus"-Potenzial und die Gleichstromdichte des Sondenstroms zur Auswertung der Gleichstromkorrosion herangezogen werden, und sowohl die Gleichstromdichte als auch die Wechselstromdichte jeweils des Sondenstroms zur Auswertung der Wechselstromkorrosion herangezogen werden.

Eine Aufgabe der vorliegenden Erfindung ist es, ein Verfahren zur Überwachung eines elektrisch leitfähigen und durch kathodischen Korrosionsschutz geschützten Objekts der eingangs beschriebenen Art bereitzustellen, so dass unerwünschte Kontakte zu dem Objekt zuverlässiger als bisher bekannt erkannt werden können. Dies soll insbesondere für vorsätzlich ausgeführte unerwünschte Kontakte ermöglicht werden. Zusätzlich oder alternativ sollen Fehlalarme, insbesondere bei durch kathodischen Korrosionsschutz geschützten Objekten, bei denen ein geregelter Anodenstrom verwendet wird, reduziert werden. Zusätzlich oder alternativ soll eine qualitative Beurteilung eines unerwünschten Kontakts ermöglicht werden. Zusätzlich oder alternativ sollen langfristige Auswirkungen von erfolgten unerwünschten Kontakten erkannt werden können. Zumindest soll ein alternatives Verfahren zu den bekannten Verfahren bereitgestellt werden.

Die Aufgabe wird erfindungsgemäß durch ein Verfahren mit den Merkmalen des Patentanspruchs 1 sowie durch eine Überwachungsvorrichtung mit den Merkmalen des Patentanspruchs 17 gelöst. Vorteilhafte Weiterbildungen sind in den Unteransprüchen beschrieben.

Dem erfindungsgemäßen Verfahren sowie der erfindungsgemäßen Überwachungsvorrichtung sei vorangestellt, dass eine galvanische Erdverbindung, d.h. ein Kontakt, zu z.B. einer kathodisch geschützten Pipeline zu einer Stromerhöhung des eingespeisten Schutzstroms und bzw. oder zu einem erhöhten Spannungsabfall an einer Rohrstrommessstelle führen kann. Je nach Charakteristik des Kontakts kann dies zu unterschiedlichen Ausprägungen der Messwertänderung führen.

Bei einer konstanten Berührung in Form eines Rechtecksignals kann dieser Kontakt zu einem Stromanstieg in der Länge des Signals führen. Diese Signalform wird bei dem eingangs beschriebenen Stand der Technik betrachtet. Dieser Idealfall eines Rechtecksignals durch eine galvanische Berührung der Pipeline ist jedoch in der Praxis selten zu erwarten. Die in der Praxis zu erwartenden Kontakte entsprechen selten einer gleichförmigen Berührung. Die Signale werden vielmehr gepulste Signale mit unterschiedlicher Frequenz und unterschiedlichen Ausbreitungswiderständen entsprechen. Zur Erkennung derartiger Kontakte sind die bekannten Verfahren nicht erfolgreich und bzw. oder nicht zuverlässig anwendbar.

Basierend auf dieser Erkenntnis liegt der vorliegenden Erfindung der Gedanke zugrunde, ein Verfahren zur Überwachung eines elektrisch leitfähigen und durch kathodischen Korrosionsschutz geschützten Objekts wie z.B. einer Pipeline zur Verfügung zu stellen, welches derartige Signale eines Kontakts und insbesondere eines vorsätzlich ausgeführten unerwünschten Kontakts wie z.B. eines Sabotageakts oder eines terroristischen Angriffs als unerlaubten Trasseneingriff erfolgreich und zuverlässig erkennen kann.

Somit betrifft die vorliegende Erfindung ein Verfahren zur Überwachung eines elektrisch leitfähigen und durch kathodischen Korrosionsschutz geschützten Objekts mit wenigstens den Schritten:
- Erfassen eines zeitlichen Verlaufs eines Rohrstroms und eines Einschaltpotentials und optional eines Körperschalls des Objekts,
- Filtern des erfassten Rohrstroms und des erfassten Einschaltpotentials und optional des erfassten Körperschalls mittels jeweils wenigstens eines Bandpassfilters, dessen Durchlassbereich dem Frequenzbereich eines Kontakts in Form einer galvanischen Erdverbindung entspricht, und
- Auswerten des gefilterten erfassten Rohrstroms und des gefilterten erfassten Einschaltpotentials und optional des gefilterten erfassten Körperschalls.

Unter einem Rohrstrom ist im Wesentlichen der Gleichstrom zu verstehen, der über das Objekt wie z.B. eine Pipeline fließt. Der Rohrstrom hat üblicherweise zwei Ursachen: Zum einen den Schutzstrom, welcher durch eine Schutzstromvorrichtung zum kathodischen Korrosionsschutz der Pipeline zur Verfügung gestellt wird; zum anderen fremde Anlagen wie beispielsweise Straßenbahnen und dergleichen. Dabei können weiterhin auch Wechselstromkomponenten enthalten sein, welche z.B. durch Hochspannungsfreileitungen oder elektrifizierte Bahntrassen induziert werden können.

Das Einschaltpotential ist das Potential zwischen dem Objekt wie z.B. einer Pipeline und dem Erdreich bei eingeschalteter Schutzstromvorrichtung zum kathodischen Korrosionsschutz der Pipeline, üblicherweise gemessen gegen eine Cu/CuSO₄-Elektrode. Das Einschaltpotential bildet sich aus, wenn Schutzstrom in das Erdreich gespeist wird.

Unter Körperschall wird üblicherweise Schall verstanden, welcher sich in einem Festkörper ausbreitet. Hierunter fällt auch die Übertragung von Schwingungen in Objekten wie z.B. in einer Pipeline. Die Messung von Körperschall erfolgt üblicherweise über Kontaktmikrofone, Körperschallmikrofone oder Körperschallabnehmer, welche als Beschleunigungssensoren, welche meist den piezoelektrischen Effekt verwenden, die Beschleunigung in elektrische Signale wandeln.

Erfindungsgemäß wird nun ein zeitlicher Verlauf der Signale des Rohrstroms und des Einschaltpotentials erfasst und mittels wenigstens eines Bandpassfilters gefiltert, so dass ein Frequenzbereich betrachtet werden kann, in dem im Falle eines Kontakts eine Veränderung im Signalverlauf auftreten wird. Die Filterung erfolgt vorzugsweise mit möglichst steilen Flanken, um den relevanten Frequenzbereich möglichst gezielt auswerten zu können.

Mit anderen Worten liegen aus praktischen Untersuchungen, bei denen eine Pipeline möglichen Kontakten ausgesetzt wurde, Erkenntnisse vor, in welchen Frequenzbereichen dieser Signale diese Kontakte zu Veränderungen im Signalverlauf führen und somit erkennbar sind. Somit führen diese Kontakte zu charakteristischen Veränderungen der Signalverläufe gegenüber dem ungestörten Zustand. Diese entsprechenden Frequenzbereiche werden daher erfindungsgemäß gezielt aus dem erfassten Signal herausgefiltert und auf die bekannten Veränderungen ausgewertet. Hierdurch kann ein vorbestimmter, d.h. zuvor experimentell untersuchter, Kontakt zuverlässig erkannt werden.

Ferner wurde durch die praktisch untersuchten Kontakte festgestellt, dass diese auch zu unterschiedlichen Veränderungen im Signalverlauf führen können. Mit anderen Worten können unterschiedliche Kontakte wie z.B. ein Bohren gegenüber einem Sägen an einer Pipeline zu unterschiedlichen Veränderungen im Signalverlauf führen, welche charakteristisch für diese Art des Kontakts sein können. Sind diese Unterschiede bekannt, so kann durch das Auswerten nicht nur das Auftreten eines Kontakts überhaupt erkannt werden, sondern es kann ggfs. unterschieden werden, welche Art von Kontakt aus den vorbestimmten, d.h. zuvor experimentell untersuchten, Kontakten vorliegt. Diese zusätzliche und bisher nicht zur Verfügung stehende Erkenntnis kann genutzt werden, um auf den erkannten Kontakt abgestimmte Maßnahmen einleiten zu können. Mit anderen Worten kann eine Klassifizierung von Kontakten erfolgen.

Vorzugsweise werden mehrere Signale des Rohrstroms, des Einschaltpotentials und des Körperschalls erfasst und jeweils mittels wenigstens eines Bandpassfilters gefiltert und wie zuvor beschrieben ausgewertet. Hierdurch kann ein vorbestimmter Kontakt noch zuverlässiger erkannt werden, weil mehr Informationen ausgewertet werden. Dies kann auch die Wahrscheinlichkeit von Fehlalarmen reduzieren oder Fehlalarme sogar vollständig vermeiden. Ferner kann hierdurch sicherer zwischen unterschiedlichen vorbestimmten Kontakten unterschieden werden.

Gemäß eines Aspekts der vorliegenden Erfindung weist das Filtern des erfassten Rohrstroms und bzw. oder des erfassten Einschaltpotentials und bzw. oder des erfassten Körperschalls mittels jeweils wenigstens eines Bandpassfilters wenigstens auf:
- Filtern des erfassten Rohrstroms und bzw. oder des erfassten Einschaltpotentials und bzw. oder des erfassten Körperschalls mittels jeweils eines ersten Bandpassfilters mit einem ersten Durchlassbereich, und
- Filtern des erfassten Rohrstroms und bzw. oder des erfassten Einschaltpotentials und bzw. oder des erfassten Körperschalls mittels jeweils eines zweiten Bandpassfilters mit einem zweiten Durchlassbereich.

Diesem Aspekt der vorliegenden Erfindung liegt die Erkenntnis zugrunde, dass die vorbestimmten Kontakte zu Veränderungen der Signalverläufe in unterschiedlichen Frequenzbereichen führen können. Auch können diese Veränderungen der Signalverläufe unterschiedlich stark ausgeprägt sein. Somit kann es vorteilhaft sein, mehrere Frequenzbereiche innerhalb der zeitlichen Signalverläufe herauszufiltern und auszuwerten, um einen Kontakt der Pipeline, welcher einem der vorbestimmten Kontakte entspricht, möglichst zuverlässig erkennen zu können. Dies kann die Wahrscheinlichkeit von Fehlalarmen weiter reduzieren oder Fehlalarme sogar vollständig vermeiden und bzw. oder die Unterscheidung von verschiedenen vorbestimmten Kontakten verbessern.

Gemäß eines weiteren Aspekts der vorliegenden Erfindung weist das Auswerten des gefilterten erfassten Rohrstroms und bzw. oder des gefilterten erfassten Einschaltpotentials und bzw. oder des gefilterten erfassten Körperschalls wenigstens auf:
- jeweils Vergleichen der Amplitude des gefilterten erfassten Rohrstroms und bzw. oder des gefilterten erfassten Einschaltpotentials und bzw. oder des gefilterten erfassten Körperschalls mit einer jeweils vorbestimmten Amplitude, und
- Erkennen eines Kontakts in Form einer galvanischen Erdverbindung bei Erreichen oder Überschreiten der jeweiligen vorbestimmten Amplitude.

Diesem Aspekt der vorliegenden Erfindung liegt die Erkenntnis zugrunde, dass die Amplitude eines der Signalverläufe des Rohrstroms, des Einschaltpotentials oder des Körperschalls in dem herausgefilterten Frequenzbereich ein repräsentativer und einfach auszuwertender Parameter sein kann, durch den ein Kontakt erkannt werden kann. Hierzu kann bei den vorangegangenen praktischen Untersuchungen der möglichen Kontakte in dem jeweiligen Frequenzbereich eine Signalamplitude bestimmt worden sein, welche bei der Durchführung des erfindungsgemäßen Verfahrens nun als vorbestimmte Amplitude des Rohrstroms, des Einschaltpotentials oder des Körperschalls mit dem gefilterten Messwert verglichen werden kann. Hierdurch kann eine einfache und dennoch zuverlässige Auswertung erfolgen, welche Fehlalarme reduzieren bzw. vermeiden und bzw. oder Kontakte unterscheiden kann.

Gemäß eines weiteren Aspekts der vorliegenden Erfindung weist das Verfahren zwischen dem Erfassen und dem Filtern wenigstens den weiteren Schritt auf:
- Filtern des erfassten Rohrstroms und bzw. oder des erfassten Einschaltpotentials und bzw. oder des erfassten Körperschalls mittels jeweils wenigstens eines Bandsperrfilters, dessen Sperrbereich dem Frequenzbereich einer vorbestimmten Störung entspricht.

Hierdurch kann mittels eines Bandpassfilters ein Frequenzbereich aus dem zeitlichen Signalverlauf herausgefiltert werden, in dem üblicherweise hauptsächlich bis ausschließlich bekannte Störungen zu erwarten sind. Dies kann z.B. der Frequenzbereich um ca. 16 2/3 Hz sein, welcher auf die Wechselspannung von Bahntrassen zurückzuführen sein kann. Dies kann z.B. der Frequenzbereich um ca. 50 Hz sein, welcher auf das Stromversorgungsnetz zurückzuführen sein kann. Auch können durch einen Bandsperrfilter mehrere vorbestimmte Störungen bzw. deren Frequenzbereiche herausgefiltert werden. Alternativ können mehrere Bandsperrfilter verwendet werden, welche jeweils einen Frequenzbereich sperren. Diese vorbestimmten Störungen können lediglich aus einem der Signalverläufe des Rohrstroms, des Einschaltpotentials oder des Körperschalls, aus mehreren dieser Signalverläufe oder aus allen diesen Signalverläufen herausgefiltert werden.

Das erfindungsgemäße Verfahren weist ferner wenigstens die Schritte auf:
- Erfassen eines zeitlichen Verlaufs eines Rohrstroms und eines Einschaltpotentials des Objekts,
- Korrelieren des erfassten Rohrstroms mit dem erfassten Einschaltpotential, und
- Auswerten der Korrelation von erfasstem Rohrstrom und erfasstem Einschaltpotential.

Diesen Merkmalen der vorliegenden Erfindung liegt die Erkenntnis zugrunde, dass es sich bei praktischen Untersuchungen von Kontakten gezeigt hat, dass im normalen, ungestörten Zustand des Objekts wie z.B. einer Pipeline die Signalverläufe von Rohrstrom und Einschaltpotential in einem gewissen Maß miteinander korrelieren. Ferner wurde festgestellt, dass diese Korrelation bei einem Kontakt einbrechen kann. Somit kann mit dem erfindungsgemäßen Verfahren ein Kontakt erkannt werden. Dies kann zuverlässiger als bisher bekannt erfolgen. Ferner kann hierdurch die Wahrscheinlichkeit von Fehlalarmen reduziert oder Fehlalarme sogar vollständig vermieden und bzw. oder die Unterscheidung von verschiedenen vorbestimmten Kontakten ermöglicht werden.

Gemäß eines Aspekts der vorliegenden Erfindung weist das Verfahren zwischen dem Erfassen und dem Korrelieren wenigstens den weiteren Schritt auf:
- Filtern des erfassten Rohrstroms und bzw. oder des erfassten Einschaltpotentials mittels jeweils wenigstens eines Bandsperrfilters, dessen Sperrbereich dem Frequenzbereich einer vorbestimmten Störung entspricht.

Hierdurch können die gleichen Vorteile wie diesbezüglich bei dem vorangegangenen erfindungsgemäßen Verfahren auch bei diesem erfindungsgemäßen Verfahren erreicht werden.

Das erfindungsgemäße Verfahren weist ferner wenigstens die Schritte auf:
- Erfassen eines zeitlichen Verlaufs eines Rohrstroms und eines Einschaltpotentials des Objekts,
- Erstellen wenigstens einer Statistik des erfassten Rohrstroms und des erfassten Einschaltpotentials über einen vorbestimmten Zeitraum, und
- jeweils Auswerten der Statistik des erfassten Rohrstroms und der Statistik des erfassten Einschaltpotentials.

Hierdurch wird es ermöglicht, auch Veränderungen der absoluten Werte des Rohrstroms und bzw. oder des Einschaltpotentials zu berücksichtigen. Zu diesem Zweck können die Signalverläufe des Rohrstroms und des Einschaltpotentials kontinuierlich statistisch erfasst und dahingehend ausgewertet werden, ob sich Veränderungen gegenüber einem vergangenen Zeitraum ergeben. Ist dies der Fall, kann ein unerwünschter Kontakt erkannt werden. Dies kann zu einer zuverlässigeren Erkennung von unterwünschten Kontakten als bisher bekannt führen, wodurch auch Fehlalarme reduziert oder sogar vermieden werden können. Über die Vorgabe der Dauer des vorbestimmten Zeitraums kann dabei z.B. unterschieden werden, ob durch einen vergleichsweise kurzen Zeitraum kurzfristige Änderungen wie ein aktuell auftretender Kontakt erkannt werden sollen. Alternativ kann über die Vorgabe eines vergleichsweise längeren Zeitraums eher ein anhaltender geänderter Zustand wie z.B. die spätere Erdbedeckung einer, bei einer Freilegung unbemerkten, beschädigten Pipeline erkannt werden. Hierdurch können über diesen Aspekt der vorliegenden Erfindung nicht nur stattfindende Kontakte sondern auch stattgefundene Kontakte im Nachhinein erkannt werden. Dies kann hilfreich sein, falls ein stattfindender Kontakt nicht erkannt werden konnte.

Gemäß eines Aspekts der vorliegenden Erfindung weist das Erstellen der Statistik des erfassten Rohrstroms und bzw. oder des erfassten Einschaltpotentials über den vorbestimmten Zeitraum wenigstens auf:
- Erstellen wenigstens einer Statistik des erfassten Rohrstroms und bzw. oder des erfassten Einschaltpotentials über einen ersten vorbestimmten Zeitraum, und
- Erstellen wenigstens einer Statistik des erfassten Rohrstroms und bzw. oder des erfassten Einschaltpotentials über einen zweiten vorbestimmten Zeitraum,
wobei der erste vorbestimmte Zeitraum kürzer als der zweite vorbestimmte Zeitraum ist.

Hierdurch kann es ermöglicht werden, die zuvor beschriebenen statistischen Auswertungen nach kurzfristigen Änderungen und nach anhaltenden Änderungen gleichzeitig und parallel zueinander auszuführen, um beide Arten von Kontakterkennungen und deren Vorteile nutzen zu können.

Gemäß eines weiteren Aspekts der vorliegenden Erfindung weist das Auswerten der Statistik des erfassten Rohrstroms und bzw. oder der Statistik des erfassten Einschaltpotentials jeweils wenigstens auf:
- jeweils Bestimmen der Standardabweichung des erfassten Rohrstroms und bzw. oder des erfassten Einschaltpotentials über den vorbestimmten Zeitraum,
- Vergleichen der bestimmten Standardabweichung des erfassten Rohrstroms und bzw. oder des erfassten Einschaltpotentials mit einer jeweils vorbestimmten Standardabweichung, und
- Erkennen eines Kontakts in Form einer galvanischen Erdverbindung bei Erreichen oder Überschreiten der jeweiligen vorbestimmten Standardabweichung.

Unter der Standardabweichung ist die empirische Standardabweichung zu verstehen, welche auch als Stichprobenstreuung oder Stichprobenstandardabweichung bezeichnet werden kann. Die Standardabweichung ist in der deskriptiven Statistik ein Streuungsmaß für Stichproben. Die Standardabweichung ist ein Maß dafür, wie weit die Stichprobe im Schnitt um das arithmetische Mittel streut. Die Standardabweichung ist eng verwandt mit der empirischen Varianz. Im Gegensatz zu dieser besitzt die Standardabweichung aber dieselbe Dimension und dieselbe Einheit wie die Stichprobe selbst.

Auf diese Art und Weise kann eine Auswertung der Statistik dahingehend erfolgen, dass für den betrachteten Signalverlauf die Standardabweichung fortlaufend über den vorbestimmten Zeitraum gebildet und auf Veränderungen ausgewertet wird, welche aufgrund der Erkenntnisse von z.B. vorangegangenen praktischen Untersuchungen mit vorbestimmten Kontakten bekannt sind. Aus diesen praktischen Untersuchungen können die vorbestimmten Standardabweichungen resultieren, deren Erreichen oder Überschreiten zu einem Erkennen des unerwünschten Kontakts führen kann.

Gemäß eines weiteren Aspekts der vorliegenden Erfindung weist das Verfahren zwischen dem Erfassen und dem Erstellen wenigstens den weiteren Schritt auf:
- Filtern des erfassten Rohrstroms und bzw. oder des erfassten Einschaltpotentials mittels jeweils wenigstens eines Tiefpassfilters.

Da das Erstellen der Statistik auf den erfassten Rohrstrom als Gleichstrom und bzw. oder auf das erfasste Einschaltpotential als Gleichspannung ausgerichtet ist, kann durch die Filterung des tieffrequenten Anteils des jeweiligen zeitlichen Verlaufs der Signalanteil im Frequenzbereich herausgefiltert und der nachfolgenden Verarbeitung zur Verfügung gestellt werden, welcher diesen Gleichstromanteil bzw. Gleichspannungsanteil enthält. Dies kann das Erstellen der Statistik verbessern, um die zuvor beschriebene Auswertung mit möglichst hoher Zuverlässigkeit durchführen zu können.

Gemäß eines weiteren Aspekts der vorliegenden Erfindung weist das Verfahren nach dem Auswerten wenigstens den weiteren Schritt auf:
- kombiniertes Auswerten wenigstens zweier Ergebnisse, vorzugsweise aller Ergebnisse, des Auswertens eines zuvor zuerst beschriebenen Verfahrens, des Auswertens eines zuvor danach beschriebenen Verfahrens und des Auswertens eines zuvor danach beschriebenen Verfahrens.

Diesem Aspekt der vorliegenden Erfindung liegt dabei die Erkenntnis zugrunde, dass die drei zuvor beschriebenen erfindungsgemäßen Verfahren jeweils zwar die dort beschriebenen Eigenschaften besitzen und Vorteile bewirken können, jedoch die Ausführung von wenigstens zwei dieser Verfahren zeitgleich parallel zueinander und vorzugsweise aller drei Verfahren zeitgleich parallel zueinander diese Eigenschaften und bzw. oder Vorteile miteinander kombinieren und bzw. oder verstärken kann. Somit können die jeweils gewonnenen einzelnen Erkenntnisse auch miteinander kombiniert ausgewertet werden, so dass hierdurch ein Kontakt überhaupt oder zuverlässiger erkannt werden kann als bei einer isolierten Betrachtung.

Beispielsweise könnte ein geringfügiger Einbruch der Korrelation zwischen Rohrstrom und Einschaltpotential alleine nicht sicher als Kontakt erkannt werden. Verändern sich jedoch gleichzeitig z.B. die Statistik über einen vergleichsweise kurzen Zeitraum und bzw. oder steigt die Amplitude eines bandgefilterten Frequenzbereichs eines Signalverlaufs signifikant an, auch wenn z.B. ein Grenzwert einer vorbestimmten Amplitude nicht erreicht wird, so kann dennoch auf einen unerwünschten Kontakt geschlossen werden, welcher durch eine isolierte Auswertung nicht zu erkennen wäre. Dies kann die Zuverlässigkeit der Erkennung von Kontakten erhöhen.

In einem anderen Fall kann die kombinierte Auswertung dazu führen, dass z.B. zwar ein signifikanter Einbruch der Korrelation zwischen Rohrstrom und Einschaltpotential erfolgt und erkannt wird, gleichzeitig jedoch weder einer kurzzeitigen Statistik noch der Auswertung der bandgefilterten Frequenzbereiche eine signifikante Änderung zu entnehmen ist. In diesem Fall könnte darauf geschlossen werden, dass der Einbruch der Korrelation andere Ursachen als einen unerwünschten Kontakt haben muss, so dass ein Fehlalarm vermieden werden kann.

Durch die kombinierte Auswertung kann es auch ermöglicht bzw. dies verbessert werden, dass ein unerwünschter Kontakt dadurch überhaupt erst bzw. zuverlässiger klassifiziert werden kann, indem die charakteristischen Informationen eines zuvor praktisch untersuchten Kontakts in der Kombination der miteinander gemeinsam betrachteten Auswertungen der einzelnen erfindungsgemäßen Verfahren wiedererkannt werden.

Gemäß eines weiteren Aspekts der vorliegenden Erfindung erfolgt das kombinierte Auswerten wenigstens zweier Ergebnisse, vorzugsweise aller Ergebnisse, gewichtet. Hierdurch kann zwischen der Aussagekraft der Ergebnisse der verschiedenen erfindungsgemäßen Verfahren abgewogen werden, um mit der kombinierten Auswertung möglichst gute Ergebnisse hinsichtlich der zuvor beschriebenen Eigenschaften und Vorteile zu erzielen. Die Gewichtung kann dauerhaft konstant vorgegeben sein oder im Laufe des Betriebs verändert werden. Insbesondere können je nach Auftreten der Ergebnisse unterschiedliche Gewichtungen vorgenommen werden. Beispielsweise kann diejenige Auswertung, welche zuerst ein Ergebnis eines erkannten unerwünschten Kontakts liefern kann, eine höhere Gewichtung als das weitere Ergebnis bzw. als die weiteren Ergebnisse erhalten, so dass das weitere Ergebnis bzw. die weiteren Ergebnisse als Verifikation des ersten Ergebnisses verwendet werden können.

Gemäß eines weiteren Aspekts der vorliegenden Erfindung erfolgt das Auswerten eines zuvor zuerst beschriebenen Verfahrens und bzw. oder das Auswerten eines zuvor danach beschriebenen Verfahrens und bzw. oder das Auswerten eines zuvor danach beschriebenen Verfahrens und bzw. oder das kombinierte Auswerten eines zuvor danach beschrieben Verfahrens mittels einer künstlichen Intelligenz, vorzugweise mittels einer Fuzzy-Logik oder mittels eines künstlichen neuronalen Netzes.

Unter dem Begriff der künstlichen Intelligenz wird üblicherweise ein Teilgebiet der Informatik verstanden, welches sich mit der Automatisierung intelligenten Verhaltens befasst. Im Allgemeinen bezeichnet künstliche Intelligenz den Versuch, eine menschenähnliche Intelligenz nachzubilden, d. h. einen Computer zu bauen oder so zu programmieren, dass er eigenständig Probleme bearbeiten kann.

Die Fuzzy-Logik ist eine Theorie, welche heute überwiegend in angewandten Bereichen wie der Regelungstechnik eine Rolle spielt. Sie ist eine Verallgemeinerung der zweiwertigen Booleschen Logik. Beispielsweise kann damit die Ausprägung einer Zugehörigkeit - die sogenannte Fuzziness - wie "ein bisschen", "ziemlich", "stark" oder "sehr" in mathematischen Modellen erfasst werden. Die Fuzzylogik basiert auf den Fuzzy-Mengen (Fuzzy-Sets) und sogenannten Zugehörigkeitsfunktionen, die Objekte auf Fuzzy-Mengen abbilden, sowie passenden logischen Operationen auf diesen Mengen und ihrer Inferenz. Bei technischen Anwendungen müssen außerdem Methoden zur Fuzzyfizierung und Defuzzyfizierung betrachtet werden, d. h. Methoden zur Umwandlung von Angaben und Zusammenhängen in Fuzzylogik und wieder zurück.

Künstliche neuronale Netze, auch künstliche neuronale Netzwerke, sind üblicherweise Netze aus künstlichen Neuronen. Sie sind Forschungsgegenstand der Neuroinformatik und stellen einen Zweig der künstlichen Intelligenz dar. Die künstlichen neuronalen Netze haben, ebenso wie künstliche Neuronen, ein biologisches Vorbild. Man stellt sie den natürlichen neuronalen Netzen gegenüber, welche Nervenzellvernetzungen im Gehirn und im Rückenmark bilden. Bei künstlichen neuronalen Netzen geht es jedoch mehr um eine Abstraktion (Modellbildung) von Informationsverarbeitung und weniger um das Nachbilden biologischer neuronaler Netze.

Diesem Aspekt der vorliegenden Erfindung liegt die Erkenntnis zugrunde, dass das menschliche Verhalten, aus verschiedenen Informationen wie hier den Ergebnissen von wenigstens zwei Auswertungen eine resultierende Erkenntnis zu ziehen, mittels einer künstlichen Intelligenz nachgebildet werden kann, um eine möglichst zuverlässige Aussage treffen zu können. Ebenso können hierdurch Fehlalarme reduziert oder vermieden sowie kann eine Klassifizierung eines erkannten Kontakts durchgeführt werden. Mit anderen Worten kann hierdurch ein menschliches Entscheidungsverhalten möglichst gut nachgebildet und genutzt werden, um möglichst richtige Entscheidungen zu treffen. Zu diesem Zweck können eine künstliche Intelligenz und vorzugsweise eine Fuzzy-Logik, alternativ ein künstliches neuronales Netz, verwendet werden, um die einzelnen Ergebnisse miteinander zu verknüpfen und hierdurch in Relation zueinander zu betrachten und auszuwerten. Dies kann vorzugsweise auch eine Gewichtung der einzelnen Ergebnisse zueinander beinhalten.

Gemäß eines weiteren Aspekts der vorliegenden Erfindung weist das Verfahren nach dem Auswerten, vorzugsweise nach dem kombinierten Auswerten, wenigstens den weiteren Schritt auf:
- Ausgeben eines Ergebnisses des Auswertens, vorzugsweise des kombinierten Auswertens, wobei das Ausgeben vorzugsweise als Alarmieren eines Benutzers erfolgt.

Auf diese Art und Weise kann das Ergebnis, ob ein unerwünschter Kontakt erkannt wurde oder nicht und ggfs. um welche Art von unerwünschtem Kontakt es sich handelt, ausgegeben und hierdurch für weitere Schritte zur Verfügung gestellt werden, so dass auf dieses Ergebnis aufgebaut werden kann. Beispielsweise kann hierdurch eine automatische Reaktion ausgelöst werden, welche z.B. den möglichen Auswirkungen eines unerwünschten Kontakts entgegenwirken kann. Handelt es sich bei dem Objekt z.B. um eine Pipeline, kann bei Erkennung eines unerwünschten Kontakts z.B. die Förderung durch die Pipeline eingestellt werden, um für den Fall, dass der Kontakt zu einer Leckage der Pipeline führt, ein Ausfließen von Öl bzw. ein Ausströmen von Gas zu reduzieren oder vollständig zu verhindern.

Um es z.B. dem Betreiber des Objekts wie z.B. einer Pipeline zu ermöglichen, möglichst schnell auf einen erkannten unerwünschten Kontakt reagieren zu können, kann das Ausgeben vorzugsweise als Alarmieren des Benutzers erfolgen. Hierdurch kann durch das erfindungsgemäße Verfahren automatisch eine menschliche Reaktion auf den erkannten unerwünschten Kontakt veranlasst werden. Gleichzeitig kann vorzugsweise auch eine Information über die Art des Kontakts zur Verfügung gestellt werden, falls dieser wie zuvor beschrieben durch das erfindungsgemäße Verfahren ermittelt wurde, so dass der Benutzer möglichst konkret auf den Kontakt reagieren kann. Dies umfasst auch die Möglichkeit, auf einen Kontakt z.B. in Form eines Sabotageakts oder terroristischen Angriffs reagieren und dessen vollständige Ausführung noch verhindern zu können.

Gemäß eines weiteren Aspekts der vorliegenden Erfindung weist das Erfassen des zeitlichen Verlaufs des Rohrstroms und bzw. oder des Einschaltpotentials und bzw. oder des Körperschalls des Objekts wenigstens auf:
- Erfassen des zeitlichen Verlaufs des Rohrstroms und bzw. oder des Einschaltpotentials und bzw. oder des Körperschalls des Objekts als analoger Messwert, und
- Verstärken des erfassten analogen Rohrstroms und bzw. oder des erfassten analogen Einschaltpotentials und bzw. oder des erfassten analogen Körperschalls.

Hierdurch kann der jeweilige zeitliche Verlauf des Rohrstroms, des Einschaltpotentials und bzw. oder des Körperschalls als analoges Signal auch analog erfasst werden, was die Erfassung einfach und direkt gestalten kann. Ferner kann das erfasste Signal als analoger Wert verstärkt werden, um alle weiteren Schritte der Signalverarbeitung zu erleichtern, d.h. deren Wirkung zu verbessern.

Gemäß eines weiteren Aspekts der vorliegenden Erfindung weist das Erfassen des zeitlichen Verlaufs des Rohrstroms und bzw. oder des Einschaltpotentials und bzw. oder des Körperschalls des Objekts wenigstens auf:
- Erfassen des zeitlichen Verlaufs des Rohrstroms und bzw. oder des Einschaltpotentials und bzw. oder des Körperschalls des Objekts als analoger Messwert, und
- Wandeln des erfassten analogen Rohrstroms und bzw. oder des erfassten analogen Einschaltpotentials und bzw. oder des erfassten analogen Körperschalls in einen digitalen Messwert, vorzugsweise mit einer Auflösung von 24 Bit.

Hierdurch kann der jeweilige zeitliche Verlauf des Rohrstroms, des Einschaltpotentials und bzw. oder des Körperschalls als analoges Signal auch analog erfasst werden, was die Erfassung einfach und direkt gestalten kann. Ferner kann das erfasste analoge Signal in ein digitales Signal gewandelt werden, um es digital weiterzuverarbeiten. Dies kann die Weiterverarbeitung des Signals und damit die Durchführung der Schritte der erfindungsgemäßen Verfahren mittels digitaler Technik wie z.B. einem Computer ermöglichen. Hierdurch kann eine leistungsfähige und bzw. oder einfach und flexibel zu schaffende bzw. zu ändernde Technik verwendet werden, um die erfindungsgemäßen Verfahren umzusetzen. Insbesondere durch eine hochauflösende digitale Signalverarbeitung mit 24 Bit kann eine hohe Qualität der erfindungsgemäßen Verfahren und damit eine hohe Zuverlässigkeit der Ergebnisse erreicht werden.

Gemäß eines weiteren Aspekts der vorliegenden Erfindung erfolgt das Erfassen des zeitlichen Verlaufs des Rohrstroms und bzw. oder des Einschaltpotentials und bzw. oder des Körperschalls des Objekts, vorzugsweise dessen Wandeln in einen digitalen Messwert, hochfrequent, vorzugsweise mit wenigstens 2 kHz. Hierdurch kann eine hochauflösende Signalverarbeitung geschaffen werden, um eine hohe Qualität der erfindungsgemäßen Verfahren und damit eine hohe Zuverlässigkeit der Ergebnisse zu erreichen.

Gemäß eines weiteren Aspekts der vorliegenden Erfindung erfolgt das Filtern des Rohrstroms und bzw. oder des Einschaltpotentials und bzw. oder des Körperschalls des Objekts digital, vorzugsweise mittels digitaler Software-Filter. Hierdurch kann eine leistungsfähige Filterung geschaffen werden, welche ferner einfach und flexibel zu schaffen bzw. zu ändern sein kann.

Die vorliegende Erfindung betrifft auch eine Überwachungsvorrichtung eines elektrisch leitfähigen und durch kathodischen Korrosionsschutz geschützten Objekts mit wenigstens einem Eingang, welcher ausgebildet ist, einen Rohrstrom zu erhalten, und wenigstens einem Eingang, welcher ausgebildet ist, ein Einschaltpotential zu erhalten, und optional wenigstens einem Eingang, welcher ausgebildet ist, einen Körperschall zu erhalten, und wenigstens einer Steuerungseinheit, welche ausgebildet ist, wenigstens ein Verfahren wie zuvor beschrieben auszuführen. Hierdurch kann eine Überwachungsvorrichtung geschaffen werden, welche in der Lage ist, ein erfindungsgemäßes Verfahren bzw. mehrere erfindungsgemäße Verfahren einzeln zeitlich versetzt und bzw. oder parallel zeitgleichauszuführen, so dass die zuvor beschriebenen Vorteile genutzt werden können. Die Überwachungsvorrichtung bzw. zumindest dessen Steuerungseinheit kann hierzu vorzugsweise ausgebildet sein, digital zu arbeiten, vorzugsweise mit einer Auflösung von 24 Bit. Ferner ist die Überwachungsvorrichtung bzw. zumindest dessen Steuerungseinheit vorzugsweise ausgebildet, hochfrequente Signalverläufe, vorzugsweise mit wenigstens 2 kHz, zu verarbeiten.

Gemäß eines Aspekts der vorliegenden Erfindung weist die Überwachungsvorrichtung wenigstens einen elektrischen Netzanschluss, welcher ausgebildet ist, die Überwachungsvorrichtung über ein elektrisches Versorgungsnetz zu versorgen, und bzw. oder wenigstens einen elektrischen Energiespeicher auf, vorzugsweise eine Batterie, welcher ausgebildet ist, die Überwachungsvorrichtung zu versorgen, wobei die Überwachungsvorrichtung ausgebildet ist, über den elektrischen Netzanschluss und bzw. oder über den elektrischen Energiespeicher betrieben zu werden.

Hierdurch kann es zum einen ermöglicht werden, dass die Überwachungsvorrichtung an einem elektrischen Versorgungsnetz betrieben werden kann, was zwar das Vorhandensein eines derartigen elektrischen Versorgungsnetzt voraussetzt, jedoch die elektrische Versorgung auch dauerhaft sicherstellen und die Technik der Überwachungsvorrichtung zur elektrischen Versorgung gering halten kann. Letzteres kann die Kosten der Überwachungsvorrichtung reduzieren.

Alternativ kann die Überwachungsvorrichtung mittels eines elektrischen Energiespeichers wie z.B. einer Batterie als nicht-wiederaufladbaren elektrischen Energiespeicher oder einem Akkumulator als wiederaufladbaren elektrischen Energiespeicher versorgt werden, was zwar den technischen Aufwand erhöhen kann und ein regelmäßiges Wechseln bzw. Aufladen des elektrischen Energiespeichers erfordern kann, andererseits den Einsatz der Überwachungsvorrichtung unabhängig von dem Vorhandensein eines elektrischen Versorgungsnetzes machen kann. Dies kann insbesondere dann vorteilhaft sein, falls die Überwachungsvorrichtung z.B. in der Nähe einer Pipeline als Objekt genutzt werden soll, dessen Trassenverlauf zu weit von einem elektrischen Versorgungsnetz ist, um diese Möglichkeit der elektrischen Energieversorgung der Überwachungsvorrichtung nutzen zu können.

Dabei ist eine (nicht-wiederaufladbare) Batterie und besonders eine Hochleistungsbatterie zu bevorzugen, weil diese üblicherweise eine vergleichsweise hohe Energiedichte aufweisen kann, was für die vorliegende Anwendung erforderlich oder zumindest nützlich sein kann. Die Batterielebensdauer sollte vorzugsweise wenigstens drei bis fünf Jahre betragen, um den Aufwand des Batteriewechsels möglichst gering zu halten.

Ferner kann eine Überwachungsvorrichtung auch beide zuvor beschriebenen Möglichkeiten aufweisen, so dass die Überwachungsvorrichtung an einem elektrischen Versorgungsnetz betrieben werden kann, falls ein solches vorhanden ist. Ferner kann ein elektrischer Energiespeicher gleichzeitig aufgeladen werden. Fehlt ein elektrisches Versorgungsnetz, kann die Überwachungsvorrichtung dennoch über den elektrischen Energiespeicher betrieben werden.

Gemäß eines weiteren Aspekts der vorliegenden Erfindung ist die Überwachungsvorrichtung unabhängig von einer Schutzstromvorrichtung ausgebildet oder die Überwachungsvorrichtung ist als Bestandteil einer Schutzstromvorrichtung ausgebildet. Im ersteren Fall kann die Überwachungsvorrichtung als einzelnes unabhängiges Gerät ausgeführt und eingesetzt werden. Dies kann ein häufiger Anwendungsfall sein, um die erfindungsgemäßen Möglichkeiten der Überwachungsvorrichtung z.B. über den Trassenverlauf einer Pipeline möglichst vollständig und lückenlos nutzen zu können. Hierdurch kann eine möglichst durchgängige Überwachung der Pipeline erreicht werden.

Alternativ die Überwachungsvorrichtung auch als Bestandteil der Schutzstromvorrichtung vorzusehen kann vorteilhaft sein, um die Möglichkeiten der erfindungsgemäßen Verfahren an der Schutzstromvorrichtung selbst zur Verfügung zustellen. Auch kann dies die Kosten zur Umsetzung der Überwachungsvorrichtung reduzieren, weil diese z.B. im Gehäuse der Schutzstromvorrichtung mit untergebracht werden und deren elektrische Energieversorgung mit nutzen kann. Ferner kann an dem Standort der Schutzstromvorrichtung auf ein zusätzliches Gerät als Überwachungsvorrichtung verzichtet werden. Des Weiteren kann die Überwachungsvorrichtung auch die Regelung der Schutzstromvorrichtung vornehmen.

Allgemein ist es für die Umsetzung der erfindungsgemäßen Verfahren z.B. durch eine erfindungsgemäße Überwachungsvorrichtung vorteilhaft, wenn hinsichtlich der Hardware und Prozessorleistung entsprechend leistungsfähige Sensoren eingesetzt werden. Die Sensoren sind vorzugsweise in der Lage, Änderungen im µV- Bereich sicher zu erfassen. Für die Potentialmessung ist aufgrund von Störsignalen ein Messbereich von ±150V vorteilhaft. Im Messbereich können vorzugswiese ca. 1 mV noch aufgelöst werden.

Da die erfindungsgemäßen Verfahren zur Überwachung keine Absolutwerte benötigen, ist es vorteilhaft, wenn die Signaländerungen mit mindestens ca. 2 kHz und mit 24 Bit Genauigkeit erfasst werden. Alle erfindungsgemäßen Verfahren werden vorzugsweise bei einer Messfrequenz von 2kHz in 500µSec abgearbeitet. Hierzu kann ein leistungsfähiges Prozessormodul erforderlich sein.

Vorzugsweise erfolgt die Umsetzung der erfindungsgemäßen Verfahren mittels Software. Hierdurch können vorzugsweise diverse digitale Filter, die möglichst parallel verarbeitet werden müssen, umgesetzt werden. Auch das Erstellen der Statistiken kann viel Rechenzeit und Speicherplatz erfordern.

Die Fuzzy-Logik als bevorzugte künstliche Intelligenz kann ein sehr vorteilhafter Aspekt der erfindungsgemäßen Verfahren sein, da es hierdurch ermöglicht werden kann, die Ergebnisse der Korrelation-, Statistik- und Filtermodule im Zusammenhang zu sehen. Hierdurch können die bekannten Szenarien eines Angriffs durch Gewichtung der einzelnen Signale erkannt werden.

Zwei Ausführungsbeispiele und weitere Vorteile der Erfindung werden nachstehend im Zusammenhang mit den folgenden Figuren erläutert. Darin zeigt:
- Figur 1: eine schematische Darstellung eines Objekts mit einer Schutzstromvorrichtung und mehrere Überwachungsvorrichtungen gemäß eines ersten Ausführungsbeispiels;
- Figur 2: eine schematische Darstellung eines Objekts mit einer Schutzstromvorrichtung und mehrere Überwachungsvorrichtungen gemäß eines zweiten Ausführungsbeispiels;
- Figur 3: eine schematische Darstellung einer Steuerungseinheit der Überwachungsvorrichtung gemäß des ersten Ausführungsbeispiels der Figur 1;
- Figur 4: eine schematische Darstellung einer Steuerungseinheit der Überwachungsvorrichtung gemäß des zweiten Ausführungsbeispiels der Figur 2;
- Figur 5: ein Blockschaltbild eines erfindungsgemäßen Verfahrens zur Überwachung des Objekts gemäß des ersten Ausführungsbeispiels der Figur 1 und des zweiten Ausführungsbeispiels der Figur 2;
- Figur 6a: einen zeitlichen Verlauf eines beispielhaften Signals;
- Figur 6b: einen zeitlichen Verlauf eines Gleichstromsignals des Signals der Figur 6a;
- Figur 6c: einen gefilterten zeitlichen Verlauf des Signals der Figur 6a;
- Figur 6d: einen zeitlichen Verlauf des Ausgangssignals eines ersten Bandpassfilters;
- Figur 6e: einen zeitlichen Verlauf des Ausgangssignals eines zweiten Bandpassfilters;
- Figur 6f: einen zeitlichen Verlauf des Ausgangssignals eines dritten Bandpassfilters;
- Figur 6g: einen zeitlichen Verlauf des Ausgangssignals einer Fuzzy-Logik;
- Figur 7a: einen zeitlichen Verlauf eines beispielhaften Signals;
- Figur 7b: einen zeitlichen Verlauf eines Ausgangssignals eines ersten Statistikmoduls; und
- Figur 7c: einen zeitlichen Verlauf eines Ausgangssignals eines zweiten Statistikmoduls.

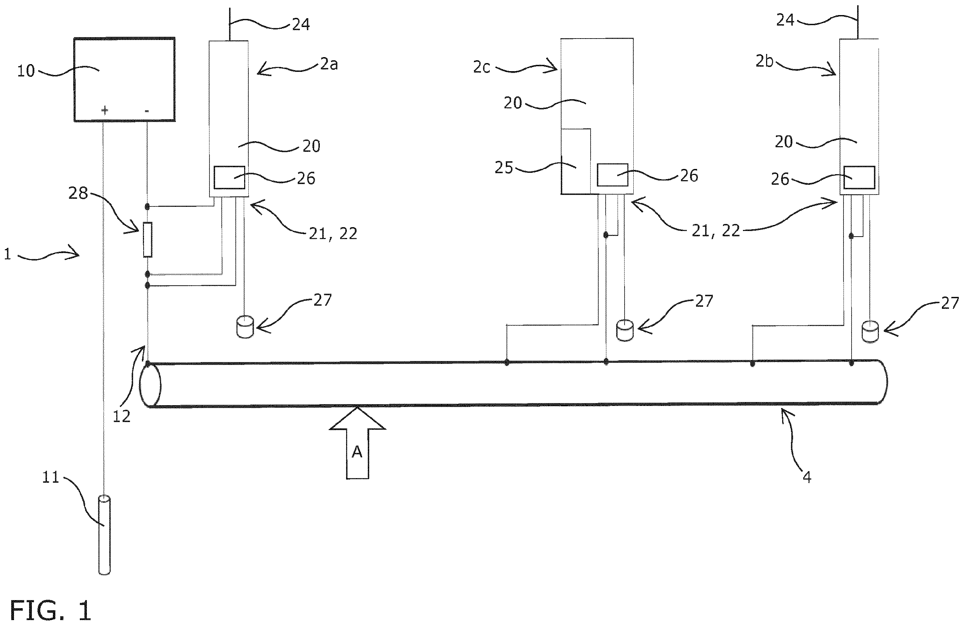

Figur 1 zeigt eine schematische Darstellung eines Objekts 4 mit einer Schutzstromvorrichtung 1 und mehreren Überwachungsvorrichtungen 2a, 2b, 2c gemäß eines ersten Ausführungsbeispiels. Als ein elektrisch leitfähiges und durch kathodischen Korrosionsschutz zu schützendes Objekt 4 wird in diesen Ausführungsbeispielen als fluidführende Leitung 4 eine Pipeline 4 betrachtet, welche im Boden angeordnet ist.

Um die Pipeline 4 vor Korrosion zu schützen, wird eine Schutzstromvorrichtung 1 eingesetzt, welche neben dem Schutzstromgerät 10 selbst eine Anode 11 aufweist, welche in der Nähe der Pipeline 4 im Boden angeordnet ist, um von seinem Pluspol einen Schutzstrom Richtung Pipeline 4 durch den Boden fließen zu lassen, welche eine Ionisation des elektrisch leitfähigen Materials der Pipeline 4 verhindern oder zumindest ausreichend verzögern kann, um die Lebensdauer der Pipeline 4 zu erhöhen. Um diesen Stromkreis zu schließen, ist das Schutzstromgerät 10 ferner mit seinem Minuspol über eine Objektverbindung 12 mit der Pipeline 4 elektrisch leitfähig verbunden.

Um die Pipeline 4 u.a. sowohl auf unabsichtliche unerwünschte Kontakte A wie z.B. dem Kontakt A eines Baggers mit der Pipeline 4 als auch auf vorsätzlich ausgeführte unerwünschte Kontakte A wie z.B. einen Sabotageakt oder einen terroristischen Angriff als unerlaubten Trasseneingriff kontinuierlich zu überwachen, werden mehrere erfindungsgemäße Überwachungsvorrichtungen 2 eingesetzt, zwischen denen in der Figur 1 als erste Überwachungseinrichtung 2a, als zweite Überwachungsvorrichtung 2b und als dritte Überwachungsvorrichtung 2c unterschieden wird.

Die Überwachungseinrichtungen 2a, 2b, 2c dienen ferner, wie bisher üblich, der Überwachung der allgemeinen Betriebsfunktion des kathodischen Korrosionsschutzes. Die bisher eingesetzten Überwachungseinrichtungen 2a, 2b, 2c dienen im Normalfall, bis auf Sonderfunktionen, nur einer täglichen Momentaufnahme der Signale des kathodischen Korrosionsschutzes, um Fehlerzustände zu erfassen.

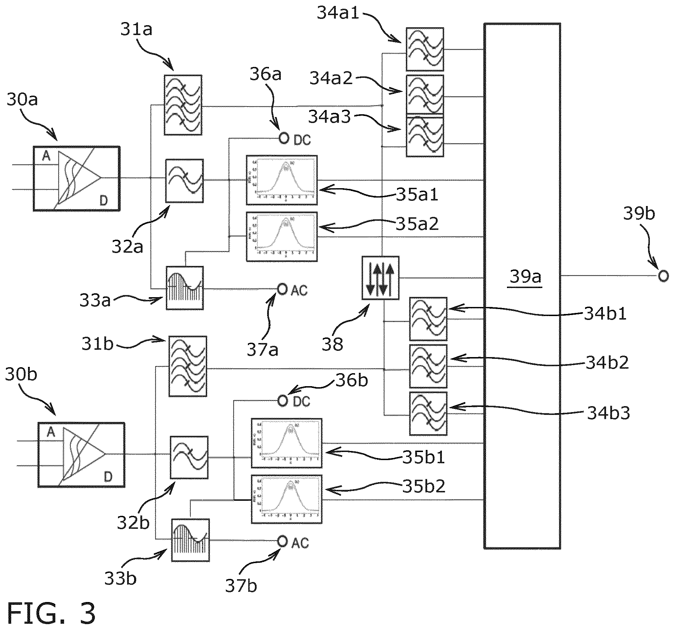

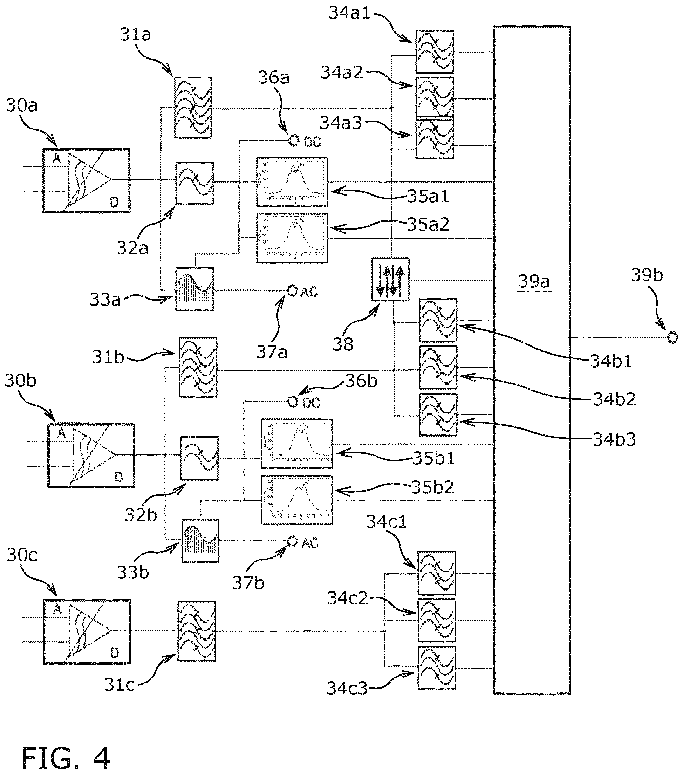

Eine erfindungsgemäße Überwachungsvorrichtung 2 gemäß des ersten Ausführungsbeispiels weist ein Überwachungsgerät 20 auf. Das Überwachungsgerät 20 weist einen Eingang 21 auf, über den dem Überwachungsgerät 20 ein Rohrstrom als analoger Messwert kontinuierlich zugeführt werden kann. Der Rohrstrom wird dabei über einen Shunt 28 als Messwiderstand 28 gemessen. Ferner weist das Überwachungsgerät 20 einen Eingang 22 auf, über den dem Überwachungsgerät 20 ein Einschaltpotential als analoger Messwert kontinuierlich zugeführt werden kann. Hierzu ist eine Bezugselektrode 27 vorhanden, welche mit dem Überwachungsgerät 20 verbunden ist und über welche das Einschaltpotential erfasst werden kann. Die Messwerte des Rohrstroms und des Einschaltpotentials werden innerhalb des Überwachungsgeräts 20 u.a. durch eine Steuerungseinheit 26 weiter verarbeitet, wie mit Bezug auf u.a. die Figuren 3 und 4 weiter unten näher erklärt werden wird.

Die drei Überwachungsvorrichtungen 2a, 2b, 2c unterscheiden sich dabei dadurch, dass das Überwachungsgerät 20 der ersten Überwachungsvorrichtung 2a als Bestandteil der Schutzstromvorrichtung 1 ausgebildet ist, so dass die Erfassung des Rohrstroms und des Einschaltpotentials mit der Erzeugung des Schutzstroms durch das Schutzstromgerät 10 kombiniert erfolgt. Die erste Überwachungsvorrichtung 2a weist ferner einen elektrischen Netzanschluss 24 auf, um über ein elektrisches Versorgungsnetz (nicht dargestellt) mit elektrischer Energie versorgt und betrieben zu werden. Der elektrische Netzanschluss 24 ist dabei identisch mit einem elektrischen Netzanschluss (nicht dargestellt) der Schutzstromvorrichtung 1, so dass beide Vorrichtungen 1, 2 gemeinsam elektrisch versorgt werden können.

Im Gegensatz hierzu sind die zweite Überwachungsvorrichtung 2b und die dritte Überwachungsvorrichtung 2c als separate Vorrichtungen unabhängig von der Schutzstromvorrichtung 1 ausgebildet. Hierdurch können derartige Überwachungsvorrichtungen 2b, 2c über den Verlauf der Trasse der Pipeline 4 regelmäßig angeordnet werden, um eine möglichst lückenlose Überwachung zu erreichen.

Steht im Verlauf der Trasse der Pipeline 4 ein elektrisches Versorgungsnetz (nicht dargestellt) zur Verfügung, so kann, wie bei der zweiten Überwachungsvorrichtung 2b dargestellt, diese über einen elektrischen Netzanschluss 24 durch das elektrische Versorgungsnetz elektrisch versorgt und betrieben werden. Ist dies nicht der Fall, erfolgt die elektrische Versorgung über einen elektrischen Energiespeicher 25 in Form einer Batterie25, welche Bestandteil der Überwachungsvorrichtung 2 ist, wie hier für die dritte Überwachungsvorrichtung 2c dargestellt. Mit anderen Worten kann zwischen einer netzbetriebenen Überwachungsvorrichtung 2b und einer batteriebetriebenen Überwachungsvorrichtung 2c unterschieden werden. Hierbei besteht erfindungsgemäß auch die Möglichkeit, dass die batteriebetriebene Überwachungsvorrichtung 2c ausgebildet ist, im Falle eines erkannten unerwünschten Kontakts A einen Standard-Batteriesensor zu aktivieren, um weitere Funktionen bereitzustellen, welche zur Reduzierung des elektrischen Energieverbrauchs ansonsten nicht verwendet werden.

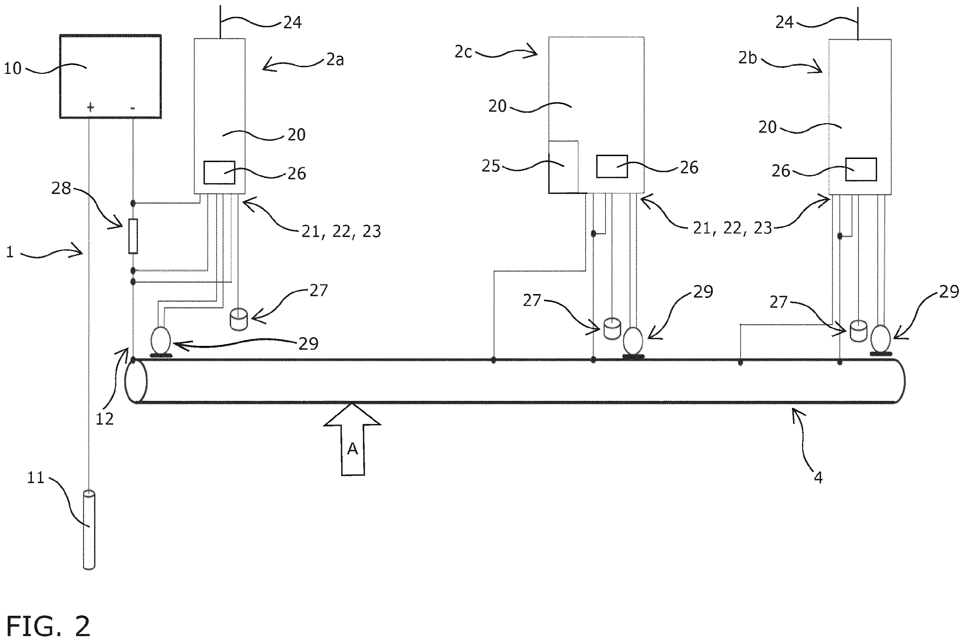

Figur 2 zeigt die Elemente der Figur 1 für ein zweites Ausführungsbeispiel. In diesem Fall gehört ein Körperschallsensor 29 zur Überwachungsvorrichtung 2, dessen Signal über einen Eingang 23 von dem Überwachungsgerät 20 aufgenommen werden kann. Der Körperschallsensor 29 ist an der Pipeline 4 derart angeordnet, so dass Schwingungen der Pipeline 4 erfasst werden können. Der Körperschallsensor 29 kann dabei als Bestandteil der Pipeline 4 ausgebildet sein, z.B. seitens des Herstellers entsprechender Rohrabschnitte, um am Einsatzort mit dem Überwachungsgerät 20 verbunden zu werden. Alternativ kann der Körperschallsensor 29 auch als separates Element auf einer verlegten Pipeline 4 aufgebracht und mit dem Überwachungsgerät 20 verbunden werden.

In jedem Fall wird es gemäß des zweiten Ausführungsbeispiels ermöglicht, zusätzlich zu dem Rohrstrom und dem Einschaltpotential auch den Körperschall der Pipeline 4 in dessen Überwachung mit einzubeziehen, wie mit Bezug auf u.a. die Figuren 3 und 4 weiter unten näher erklärt werden wird. Mit anderen Worten kann die Einbindung von Körperschallsensoren 29 in die erfindungsgemäße Überwachung erfolgen, um auch akustische Informationen mit den elektrischen Informationen in Verbindung zu bringen.

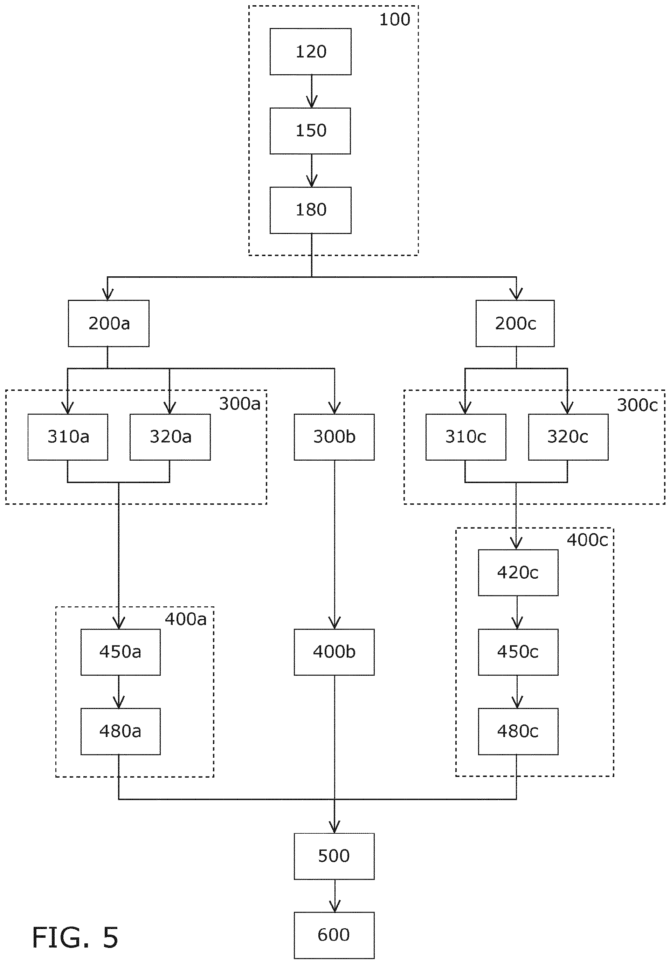

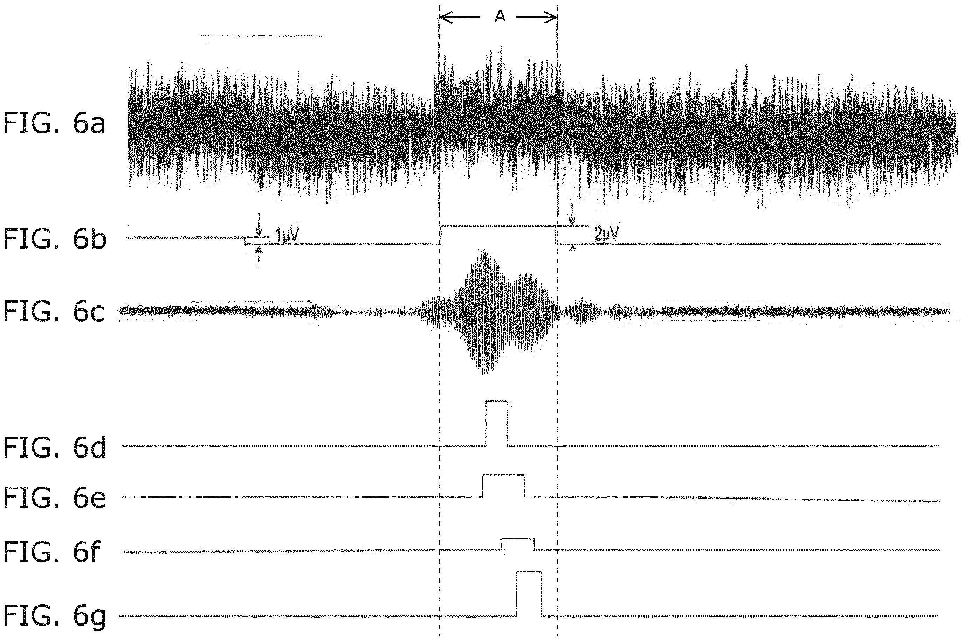

Figur 3 zeigt eine schematische Darstellung einer Steuerungseinheit 26 der Überwachungsvorrichtung 2 gemäß des ersten Ausführungsbeispiels der Figur 1. Die Steuerungseinheit 26 weist jeweils einen Analog-Digital-Wandler 30a, 30b, 30c (A/D-Wandler) auf, um die Eingangssignale zu erfassen. Ferner kann hierdurch eine digitale Potentialtrennung erfolgen. Zuvor wird das analoge Signal verstärkt. In diesem ersten Ausführungsbeispiel wird der Rohrstrom über einen ersten A/D-Wandler 30a und das Einschaltpotential über einen zweiten A/D-Wandler 30b erfasst und der Steuerungseinheit 26 zur weiteren Verarbeitung kontinuierlich als zeitlicher Signalverlauf, siehe z.B. Figur 6a, zur Verfügung gestellt. Dies erfolgt jeweils parallel durch verschiedene Verfahren, wie weiter unten u.a. mit Bezug auf die Figur 5 erklärt werden wird.

Zur Durchführung dieser Verfahren weist die Steuerungseinheit 26 jeweils ein erstes Bandsperrfilter 31a für den Rohrstrom und ein zweites Bandsperrfilter 31b für das Einschaltpotential auf, welche die gleichen Frequenzbereiche des zeitlichen Signalverlaufs sperren. Hierdurch können Frequenzbereiche wie z.B. 16 2/3 Hz und 50 Hz grundsätzlich von den weiteren Verarbeitungsschritten ausgeschlossen werden, um bekannte signifikante Störungen zu vermeiden.

Das bandsperrgefilterte Signal wird anschließend zum einen mehreren steilflankig ausgelegten Bandpassfiltern 34a1-34a3 für den Rohrstrom und mehreren Bandpassfiltern 34b1-34b3 für das Einschaltpotential zur Verfügung gestellt. Die Bandpassfilter 34a1-34a3, 34b1-34b3 sind jeweils mittels experimenteller Versuche derart bestimmt worden, dass sie jeweils genau einen Frequenzbereich hindurchlassen, in welchem bei einem unerwünschten Kontakt A eine signifikante Erhöhung der Amplitude zu erwarten ist. Ob dies für den jeweils hindurchgelassenen Frequenzbereich der Fall ist, wird anschließend mittels einer künstlichen Intelligenz 39a in Form einer Fuzzy-Logik 39a ausgewertet und erkannt, wie weiter unten beschrieben werden wird.

Das bandsperrgefilterte Signal des Rohrstroms wird zum anderen ferner mit dem bandsperrgefilterten Signal des Einschaltpotentials mittels eines Korrelationsmoduls 38 korreliert und dessen Ausgang ebenfalls der Fuzzy-Logik 39a zur Auswertung zugeführt.

Parallel wird das A/D-gewandelte Signal jeweils einem ersten Tiefpassfilter 32a für den Rohrstrom und einem zweiten Tiefpassfilter 32b für das Einschaltpotential zugeführt und derart tiefpassgefiltert, dass lediglich der Gleichanteil sowie niederfrequente Anteile des zeitlichen Signalverlaufs hindurchgelassen werden. Das tiefpassgefilterte Signal wird jeweils zwei verschiedenen Statistikmodulen 35a1-35a2, 35b1-35b2 zugeführt, so dass die Standardabweichung sowohl des Rohrstroms als auch des Einschaltpotentials jeweils in dem ersten Statistikmodul 35a1, 35b1 für einen kürzeren Zeitraum t1 und jeweils in dem zweiten Statistikmodul 35a2, 35b2 für einen längeren Zeitraum t2 erfasst werden kann. Hierdurch können signifikante Abweichungen des Verlaufs der Standardabweichung durch die anschließende Auswertung seitens der Fuzzy-Logik 39a erkannt werden. Dabei dienen die beiden ersten Statistikmodulen 35a1, 35b1 mit der Betrachtung der kürzeren Zeitdauer t1 dem Erkennen von aktuell auftretenden Kontakten A, wohingegen die beiden zweiten Statistikmodule 35a2, 35b2 mit der Betrachtung der längeren Zeitdauer t2 dem Erkennen von aufgetretenen Kontakten A im Nachhinein dienen. Der tiefpassgefilterte Rohrstrom kann ferner über einen Gleichstromausgang 36a für weitere Verarbeitungen außerhalb der erfindungsgemäßen Verfahren zur Verfügung gestellt werden. Dies gilt entsprechend für das tiefpassgefilterte Einschaltpotential über einen Gleichspannungsausgang 36b. Die Tiefpassfilterung über die Tiefpassfilter 32a, 32b erfolgt hierzu vorzugsweise mit einem Stör/Spanungsabstand von 80db, so dass die Erzeugung eines Gleichstrom- bzw. eines Gleichspannungssignals gewährleistet werden kann.

Das erfasste Signal des Rohrstroms sowie des Einschaltpotentials wird ferner jeweils einem Integratormodul 33a, 33b zugeführt, welchem ferner das jeweilige tiefpassgefilterte Signal als quasi Effektivwert (True RMS Signal) zugeführt werden. Hierdurch kann ein Wechselstrom bzw. eine Wechselspannung erzeugt werden, welche über einen Wechselstromausgang 37a bzw. über einen Wechselspannungsausgang 37b für weitere Verarbeitungen außerhalb der erfindungsgemäßen Verfahren zur Verfügung gestellt werden können.

Figur 4 zeigt eine schematische Darstellung einer Steuerungseinheit 26 der Überwachungsvorrichtung 2 gemäß des zweiten Ausführungsbeispiels der Figur 2. Die Steuerungseinheit 26 der Überwachungseinheit 2 des zweiten Ausführungsbeispiels weist alle Elemente der Steuerungseinheit 26 der Überwachungseinheit 2 des ersten Ausführungsbeispiels auf. Zusätzlich wird, wie in der Figur 2 dargestellt und dort beschrieben, ein Körperschall über einen dritten A/D-Wandler 30c erfasst und der Steuerungseinheit 26 zur Verfügung gestellt. Der zeitliche Signalverlauf des Körperschalls wird mittels eines dritten Bandsperrfilters 31c verarbeitet und dann mehreren Bandpassfiltern 34c1-34c3 zur Verfügung gestellt, um ebenfalls wie zuvor beschrieben verarbeitet und ausgewertet zu werden. Mittels der beiden Ausführungsbeispiele einer erfindungsgemäßen Überwachungsvorrichtung kann jeweils das beispielhafte erfindungsgemäße Verfahren zur Überwachung des Objekts 4 gemäß der Figur 5 ausgeführt werden, welches im Folgenden beschrieben werden wird. Ein erster Aspekt des erfindungsgemäßen Verfahrens ist dabei die Bandpassfilterung, ein zweiter Aspekt die Korrelation und ein dritter Aspekte die statistische Betrachtung.

In einem ersten Schritt 100 wird die jeweilige Messgröße wie der Rohrstrom, das Einschaltpotential oder der Körperschall seitens des jeweiligen A/D-Wandlers 30a-30c in einem ersten Teilschritt 120 als analoger zeitlicher Signalverlauf kontinuierlich erfasst, vgl. Figur 6a, in einem zweiten Teilschritt 150 verstärkt und in einem dritten Teilschritt 180 von einem analogen Signalverlauf in einem digitalen Signalverlauf gewandelt. Dies erfolgt derart hochauflösend, dass digitale Messwerte mit einer Auflösung von 24 bit und mit 2 kHz ausgegeben werden können.

Gemäß des ersten Aspekts eines zweiten Schritts 200a werden die Messgrößen durch die Bandsperrfilter 31a-31c von bekannten signifikanten Störungen befreit, vgl. Figur 6c, um anschließend durch die jeweiligen Bandpassfilter 34a1-34a3, 34b1-34b3, 34c1-34c3 in Teilschritten 310a, 320a des ersten Aspekts eines dritten Schritts 300a bandpassgefiltert zu werden. Hierdurch können ausgewählte Frequenzbereiche des jeweiligen Signalverlaufs gezielt ausgewertet werden.

Parallel hierzu werden die bandsperrgefilterten Signalverläufe des Rohrstroms und des Einschaltpotentials mittels des Korrelationsmoduls 38 gemäß des zweiten Aspekts des dritten Schritts 300b miteinander korreliert.

Weiterhin parallel hierzu werden der Rohrstrom und das Einschaltpotential jeweils gemäß dem dritten Aspekt des zweiten Schritts 200c mittels der Tiefpassfilter 32a, 32b jeweils tiefpassgefiltert, vgl. Figur 6b, um anschließend in Teilschritten 310c, 320c des dritten Aspekts des dritten Schritts 300c über den kürzeren Zeitraum t1 in den Statistikmodulen 35a1, 35b1 über den längeren Zeitraum t2 in den Statistikmodulen 35a2, 35b2 statistisch erfasst zu werden.

In einem vierten Schritt 400 erfolgt für alle drei Aspekte jeweils in der Fuzzy-Logik 39a ein Auswerten 400a, 400b, 400c der Ausgangssignale der Bandpassfilter 34a1-34a3, 34b1-34b3, 34c1-34c3, des Korrelationsmoduls 38 sowie der Statistikmodule 35a1-35a2, 35b1-35b2.

Gemäß des ersten Aspekts des vierten Schritts 400a werden die Ausgangssignale der Bandpassfilter 34a1-34a3, 34b1-34b3, 34c1-34c3 jeweils für ihren Bandpassbereich mit einer vorbestimmten Amplitude in einem ersten Teilschritt 450a verglichen, welche experimentell für mögliche unerwünschte Kontakte A ermittelt wurden. Wird eine vorbestimmte Amplitude durch die Amplitude des Signalverlaufs erreicht oder überschritten, so kann in einem zweiten Teilschritt 480a des vierten Schritts 400a des ersten Aspekts ein unerwünschter Kontakt A erkannt werden, vgl. Figuren 6d-6f.

Gemäß des zweiten Aspekts des vierten Schritts 400b wird das Ausgangssignal des Korrelationsmoduls 38 ausgewertet. Wird eine vorbestimmte Veränderung der Korrelation zwischen Rohrstrom und Einschaltpotential erkannt, so kann ebenfalls auf einen unerwünschten Kontakt A geschlossen werden.

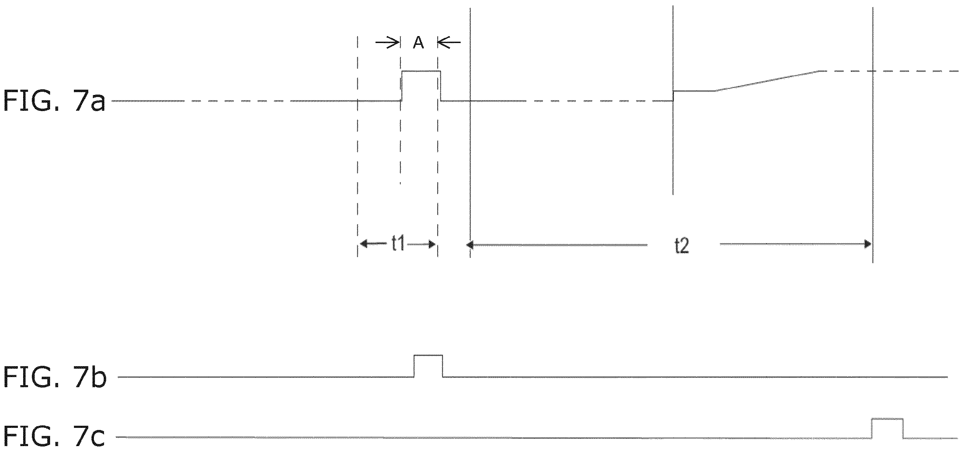

Gemäß des dritten Aspekts des vierten Schritts 400c wird in einem ersten Teilschritt 420c die Standardabweichung der jeweiligen Statistik bestimmt und in einem zweiten Teilschritt 450c mit einer vorbestimmten Standardabweichung verglichen, welche ebenfalls experimentell für den Fall eines unerwünschten Kontakts A experimentell bestimmt wurde. Tritt hier eine signifikante Änderung auf, kann ebenfalls in einem dritten Teilschritt 480c des vierten Schritts 400c des dritten Aspekts ein unerwünschter Kontakt A erkannt werden, vgl. Figuren 7a-7c.

Alle Teilschritte des vierten Schrittes 400a, 400b, 400c werden für alle drei Aspekte durch die Fuzzy-Logik 39a ausgeführt und in einem fünften Schritt 500 durch die Fuzzy-Logik 39a gewichtet miteinander im Zusammenhang kombiniert ausgewertet. Hierdurch können zuverlässigere Erkenntnisse gewonnen werden als bei einer isolierten Betrachtung der einzelnen Ergebnisse.

In einem sechsten Schritt 600 kann dann das resultierende Ergebnis der kombinierten Auswertung der Fuzzy-Logik 39a über dessen Ausgang 39b ausgegeben werden, vgl. Figur 6g, um z.B. bei einem erkannten unterwünschten Kontakt A einen Benutzer zu alarmieren. Wurde durch die kombinierte Auswertung eine bestimmte Art von unerwünschtem Kontakt A erkannt, kann diese Information zusätzlich ausgegeben werden.

Das Auftreten eines unerwünschten Kontakts zur der Pipeline 4 soll anhand eines Beispiels mit Bezug zu den Figuren 6a bis 7c wie folgt erläutert werden:
Die Figuren 6a bis 6g beschreiben die Verarbeitung des gemessenen Frequenzspektrums.
Die Figur 6a zeigt den zeitlichen Frequenzverlauf über einen gewissen Zeitraum. Innerhalb diesem dargestellten Zeitraum findet ein Angriff A statt, welcher über eine gewisse Zeit anhält. Der Angriff A kann, wie in der Figur 6b dargestellt, zu einem Anstieg des Gleichstrom- bzw. Gleichspannungssignals führen, welches durch den Tiefpassfilter 32a bzw. 32b erzeugt wird.
Die Figur 6c zeigt den Signalverlauf der Figur 6a nach Eliminierung der Störsignale durch das jeweilige Bandsperrfilter 31a, 31b, 31c.
Die Figuren 6d bis 6f zeigen jeweils das Ausgangssignal eines der drei Bandpassfilter 34a1-34a3, 34b1-34b3, 34c1-34c3 nach Anwendung der jeweiligen angriffsspezifischen Filterfrequenz über der Zeit und in der Güte.
Die Figur 6g zeigt ein Ausgangssignal der Fuzzy-Logik 39a, welches zu eine Alarmieren 600 führt.
Die Figuren 7a bis 7c beschreiben die Wirkungsweise der Kurz- und Langzeit-Statistik der Statistikmodule 35a1-35a2, 35b1-35b2.
Die Figur 7a zeigt den zeitlichen Verlauf des Gleichstrom- bzw. Gleichspannungssignals, welches durch den Tiefpassfilter 32a bzw. 32b erzeugt wird. In der Darstellung der Figur 7a erfolgt innerhalb des Zeitraums t1 ein kurzeitiger markanter Anstiegt des Gleichstrom- bzw. Gleichspannungssignals. Das jeweilige Kurzzeit-Statistikmodul 35a1, 35b1 generiert je nach Ausprägung dieses Signals, welches wahrscheinlich einen Kontakt A anzeigt, ein entsprechendes Ausgangsignal gemäß der Figur 7b, welches der Fuzzy-Logik 39a zugeführt wird.

Der Zeitraum t2 in Figur 7a weist einen verzögerten Anstieg des Gleichstrom- bzw. Gleichspannungssignals auf. Nach dem vorbestimmten Zeitraum t2 für die Langzeitstatistik generiert das Langzeit-Statistikmodul 35a2, 35b2 ein Ausgangsignal gemäß der Figur 7c, welches ebenfalls der Fuzzy-Logik 39a zugeführt wird.

### BEZUGSZEICHENLISTE (Teil der Beschreibung)

- A: unerwünschter Kontakt; Angriff
- t1: erster Zeitraum
- t2: zweiter Zeitraum

- 1: Schutzstromvorrichtung
- 10: Schutzstromgerät
- 11: Anode
- 12: Objektverbindung

- 2: Überwachungsvorrichtung eines KKS-geschützten Objekts 4
- 2a: erste Überwachungsvorrichtung 2
- 2b: zweite Überwachungsvorrichtung 2
- 2c: dritte Überwachungsvorrichtung 2
- 20: Überwachungsgerät
- 21: Eingang Rohrstrom
- 22: Eingang Einschaltpotential
- 23: Eingang Körperschall
- 24: elektrischer Netzanschluss
- 25: elektrischer Energiespeicher; Batterie
- 26: Steuerungseinheit
- 27: Bezugselektrode
- 28: Messwiderstand; Shunt
- 29: Körperschallsensor; Körperschallmikrophon

- 30a-c: A/D-Wandler mit Verstärker
- 31a-c: Bandsperrfilter
- 32a, b: Tiefpassfilter
- 33a, b: Integratormodul
- 34a1-34c3: Bandpassfilter
- 35a1-35b2: Statistikmodul
- 36a: Gleichstromausgang
- 36b: Gleichspannungsausgang
- 37a: Wechselstromausgang
- 37b: Wechselspannungsausgang
- 38: Korrelationsmodul
- 39a: künstliche Intelligenz; Fuzzy-Logik; künstliches neuronales Netz
- 39b: Ausgang der künstlichen Intelligenz

- 4: KKS-geschütztes Objekt; Leitung; Pipeline

- 100: Erfassen zeitlicher Verlauf Rohrstrom und/oder Einschaltpotential und/oder Körperschall
- 120: Erfassen als analoger Messwert
- 150: Verstärken Rohrstrom und/oder Einschaltpotential und/oder Körperschall
- 180: Wandeln in digitalen Messwert

- 200a: Filtern mittels Bandsperrfilter
- 200c: Filtern mittels Tiefpassfilter

- 300a: Filtern Rohrstrom und/oder Einschaltpotential und/oder Körperschall
- 300b: Korrelieren erfasster Rohrstrom mit erfasstem Einschaltpotential
- 300c: Erstellen Statistik Rohrstrom und/oder Einschaltpotential über Zeitraum t1, t2
- 310a: Filtern mittels erstem Bandpassfilter
- 310c: Erstellen Statistik über ersten Zeitraum t1
- 320a: Filtern mittels zweiten Bandpassfilter
- 320c: Erstellen Statistik über zweiten Zeitraum t2

- 400a: Auswerten Rohrstrom und/oder Einschaltpotential und/oder Körperschall
- 400b: Auswerten Korrelation
- 400c: Auswerten Statistik
- 420c: Bestimmen Standardabweichung
- 450a: Vergleichen Amplitude mit vorbestimmter Amplitude
- 450c: Vergleichen Standardabweichung mit vorbestimmter Standardabweichung
- 480a: Erkennen unerwünschter Kontakt bei Erreichen/ Überschreiten vorbestimmte Amplitude
- 480c: Erkennen unerwünschter Kontakt bei Erreichen/ Überschreiten vorbestimmte Standardabweichung

- 500: kombiniertes Auswerten wenigstens zweier Ergebnisse des Auswertens 400a, 400b, 400c

- 600: Ausgeben Ergebnis des (kombinierten) Auswertens 400a, 400b, 400c, 500; Alarmieren

## Patentansprüche

1. Verfahren zur Überwachung eines elektrisch leitfähigen und durch kathodischen Korrosionsschutz geschützten Objekts (4), mit den Schritten:
Erfassen (100) eines zeitlichen Verlaufs eines Rohrstroms und eines Einschaltpotentials und optional auch eines Körperschalls des Objekts (4),
Filtern (300a) des erfassten Rohrstroms und des erfassten Einschaltpotentials und optional des erfassten Körperschalls mittels jeweils wenigstens eines Bandpassfilters (34a1-34a3; 34b1-34b3; 34c1-34c3), dessen Durchlassbereich dem Frequenzbereich eines Kontakts in Form einer galvanischen Erdverbindung entspricht, und
Auswerten (400a) des gefilterten erfassten Rohrstroms und des gefilterten erfassten Einschaltpotentials und optional des gefilterten erfassten Körperschalls, Korrelieren (300b) des erfassten Rohrstroms mit dem erfassten Einschaltpotential, und Auswerten (400b) der Korrelation von erfasstem Rohrstrom und erfasstem Einschaltpotential, sowie
Erstellen (300c) wenigstens einer Statistik des erfassten Rohrstroms und des erfassten Einschaltpotentials über einen vorbestimmten Zeitraum (t1, t2), und
jeweils Auswerten (400c) der Statistik des erfassten Rohrstroms und der Statistik des erfassten Einschaltpotentials.

2. Verfahren nach Anspruch 1, wobei
das Filtern (300a) des erfassten Rohrstroms und/oder des erfassten Einschaltpotentials und/oder des erfassten Körperschalls mittels jeweils wenigstens eines Bandpassfilters (34a1-34a3; 34b1-34b3; 34c1-34c3) wenigstens aufweist:
Filtern (310a) des erfassten Rohrstroms und/oder des erfassten Einschaltpotentials und/oder des erfassten Körperschalls mittels jeweils eines ersten Bandpassfilters (34a1; 34b1; 34c1) mit einem ersten Durchlassbereich, und
Filtern (320a) des erfassten Rohrstroms und/oder des erfassten Einschaltpotentials und/oder des erfassten Körperschalls mittels jeweils eines zweiten Bandpassfilters (34a2; 34b2; 34c2) mit einem zweiten Durchlassbereich.

3. Verfahren nach Anspruch 1 oder 2, wobei
das Auswerten (400a) des gefilterten erfassten Rohrstroms und/oder des gefilterten erfassten Einschaltpotentials und/oder des gefilterten erfassten Körperschalls wenigstens aufweist:
jeweils Vergleichen (450a) der Amplitude des gefilterten erfassten Rohrstroms und/oder des gefilterten erfassten Einschaltpotentials und/oder des gefilterten erfassten Körperschalls mit einer jeweils vorbestimmten Amplitude, und
Erkennen (480a) eines Kontakts in Form einer galvanischen Erdverbindung bei Erreichen oder Überschreiten der jeweiligen vorbestimmten Amplitude.

4. Verfahren nach einem der vorherigen Ansprüche, mit wenigstens dem weiteren Schritt zwischen dem Erfassen (100) und dem Filtern (300a):
Filtern (200a) des erfassten Rohrstroms und/oder des erfassten Einschaltpotentials und/oder des erfassten Körperschalls mittels jeweils wenigstens eines Bandsperrfilters (31a; 31b; 31c), dessen Sperrbereich dem Frequenzbereich einer vorbestimmten Störung entspricht.

5. Verfahren nach einem der vorherigen Ansprüche, mit wenigstens dem weiteren Schritt zwischen dem Erfassen (100) und dem Korrelieren (300b):
Filtern (200a) des erfassten Rohrstroms und/oder des erfassten Einschaltpotentials mittels jeweils wenigstens eines Bandsperrfilters (31a; 31b; 31c), dessen Sperrbereich dem Frequenzbereich einer vorbestimmten Störung entspricht.

6. Verfahren nach einem der vorherigen Ansprüche, wobei
das Erstellen (300c) wenigstens einer Statistik des erfassten Rohrstroms und/oder des erfassten Einschaltpotentials über den vorbestimmten Zeitraum (t1, t2) wenigstens aufweist:
Erstellen (310c) wenigstens einer Statistik des erfassten Rohrstroms und/oder des erfassten Einschaltpotentials über einen ersten vorbestimmten Zeitraum (t1), und
Erstellen (320c) wenigstens einer Statistik des erfassten Rohrstroms und/oder des erfassten Einschaltpotentials über einen zweiten vorbestimmten Zeitraum (t2),
wobei der erste vorbestimmte Zeitraum (t1) kürzer als der zweite vorbestimmte Zeitraum (t2) ist.

7. Verfahren nach einem der vorherigen Ansprüche, wobei
das Auswerten (400c) der Statistik des erfassten Rohrstroms und/oder der Statistik des erfassten Einschaltpotentials jeweils wenigstens aufweist:
jeweils Bestimmen (420c) der Standardabweichung des erfassten Rohrstroms und/oder des erfassten Einschaltpotentials über den vorbestimmten Zeitraum (t1, t2),
Vergleichen (450c) der bestimmten Standardabweichung des erfassten Rohrstroms und/oder des erfassten Einschaltpotentials mit einer jeweils vorbestimmten Standardabweichung, und
Erkennen (480c) eines Kontakts in Form einer galvanischen Erdverbindung bei Erreichen oder Überschreiten der jeweiligen vorbestimmten Standardabweichung.

8. Verfahren nach einem der vorherigen Ansprüche, mit wenigstens dem weiteren Schritt zwischen dem Erfassen (100) und dem Erstellen (300c):
Filtern (200c) des erfassten Rohrstroms und/oder des erfassten Einschaltpotentials mittels jeweils wenigstens eines Tiefpassfilters (32a; 32b).

9. Verfahren nach einem der vorherigen Ansprüche, mit wenigstens dem weiteren Schritt nach dem Auswerten (400a, 400b, 400c):
kombiniertes Auswerten (500) wenigstens zweier Ergebnisse, vorzugsweise aller Ergebnisse, des Auswertens (400a) eines Verfahrens nach den Ansprüchen 1 bis 4, des Auswertens (400b) eines Verfahrens nach den Ansprüche 5 und 6 und des Auswertens (400c) eines Verfahrens nach den Ansprüchen 7 bis 10.

10. Verfahren nach Anspruch 9, wobei
das kombinierte Auswerten (500) wenigstens zweier Ergebnisse, vorzugsweise aller Ergebnisse, gewichtet erfolgt.

11. Verfahren nach einem der vorherigen Ansprüche, wobei
das Auswerten (400a) eines Verfahrens nach den Ansprüchen 1 bis 4 und/oder das Auswerten (400b) eines Verfahrens nach den Ansprüche 5 und 6 und/oder das Auswerten (400c) eines Verfahrens nach den Ansprüchen 7 bis 10 und/oder das kombinierte Auswerten (500) eines Verfahrens nach den Ansprüche 10 und 11 mittels einer künstlichen Intelligenz (39a), vorzugweise mittels einer Fuzzy-Logik (39a) oder mittels eines künstlichen neuronalen Netzes (39a), erfolgt.

12. Verfahren nach einem der vorherigen Ansprüche, mit wenigstens dem weiteren Schritt nach dem Auswerten (400a, 400b, 400c), vorzugsweise nach dem kombinierten Auswerten (500):
Ausgeben (600) eines Ergebnisses des Auswertens (400a, 400b, 400c), vorzugsweise des kombinierten Auswertens (500),
wobei das Ausgeben (600) vorzugsweise als Alarmieren (600) eines Benutzers erfolgt.

13. Verfahren nach einem der vorherigen Ansprüche, wobei
das Erfassen (100) des zeitlichen Verlaufs des Rohrstroms und/oder des Einschaltpotentials und/oder des Körperschalls des Objekts (4) wenigstens aufweist:
Erfassen (120) des zeitlichen Verlaufs des Rohrstroms und/oder des Einschaltpotentials und/oder des Körperschalls des Objekts (4) als analoger Messwert, und
Verstärken (150) des erfassten analogen Rohrstroms und/oder des erfassten analogen Einschaltpotentials und/oder des erfassten analogen Körperschalls.

14. Verfahren nach einem der vorherigen Ansprüche, wobei
das Erfassen (100) des zeitlichen Verlaufs des Rohrstroms und/oder des Einschaltpotentials und/oder des Körperschalls des Objekts (4) wenigstens aufweist:
Erfassen (120) des zeitlichen Verlaufs des Rohrstroms und/oder des Einschaltpotentials und/oder des Körperschalls des Objekts (4) als analoger Messwert, und
Wandeln (180) des erfassten analogen Rohrstroms und/oder des erfassten analogen Einschaltpotentials und/oder des erfassten analogen Körperschalls in einen digitalen Messwert, vorzugsweise mit einer Auflösung von 24 bit.

15. Verfahren nach einem der vorherigen Ansprüche, wobei
das Erfassen (100) des zeitlichen Verlaufs des Rohrstroms und/oder des Einschaltpotentials und/oder des Körperschalls des Objekts (4), vorzugsweise dessen Wandeln (180) in einen digitalen Messwert, hochfrequent, vorzugsweise mit wenigstens 2 kHz, erfolgt.

16. Verfahren nach einem der vorherigen Ansprüche, wobei
das Filtern (200a, 200c, 310a, 320a) des Rohrstroms und/oder des Einschaltpotentials und/oder des Körperschalls des Objekts (4) digital, vorzugsweise mittels digitaler Software-Filter, erfolgt.

17. Überwachungsvorrichtung (2) eines elektrisch leitfähigen und durch kathodischen Korrosionsschutz geschützten Objekts (4), umfassend wenigstens einen Eingang (21), welcher ausgebildet ist, einen Rohrstrom zu erhalten, und wenigstens einen Eingang (22), welcher ausgebildet ist, ein Einschaltpotential zu erhalten, und optional wenigstens einen Eingang (23), welcher ausgebildet ist, einen Körperschall zu erhalten, und
**gekennzeichnet durch** wenigstens eine Steuerungseinheit (26), welche ausgebildet ist, wenigstens ein Verfahren nach den vorherigen Ansprüchen auszuführen.

18. Überwachungsvorrichtung (2) nach Anspruch 17, wobei
wenigstens einen elektrischen Netzanschluss (24), welcher ausgebildet ist, die Überwachungsvorrichtung (2) über ein elektrisches Versorgungsnetz zu versorgen, und/oder wenigstens einen elektrischen Energiespeicher (25), vorzugsweise eine Batterie (25), welcher ausgebildet ist, die Überwachungsvorrichtung (2) zu versorgen,
wobei die Überwachungsvorrichtung (2) ausgebildet ist, über den elektrischen Netzanschluss (24) und/oder über den elektrischen Energiespeicher (25) betrieben zu werden.

19. Vorrichtung (2) nach Anspruch 17 oder 18, wobei
die Überwachungsvorrichtung (2) unabhängig von einer Schutzstromvorrichtung (1) ausgebildet ist, oder dass
die Überwachungsvorrichtung (2) als Bestandteil einer Schutzstromvorrichtung (1) ausgebildet ist.

## Claims

1. Method for monitoring an electrically conductive object (4) which is cathodically protected against corrosion, comprising the steps of:
recording (100) a time curve of a pipe current and of a switch-on potential and optionally also of a structure-borne noise of the object (4),
filtering (300a) the recorded pipe current and the recorded switch-on potential and optionally the recorded structure-borne noise in each case by means of at least one band-pass filter (34a1-34a3; 34b1-34b3; 34c1-34c3) of which the passband corresponds to the frequency range of a contact in the form of a galvanic ground connection, and
evaluating (400a) the filtered recorded pipe current and the filtered recorded switch-on potential and optionally the filtered recorded structure-borne noise,
correlating (300b) the recorded pipe current with the recorded switch-on potential, and
evaluating (400b) the correlation between the recorded pipe current and the recorded switch-on potential,
creating (300c) at least one statistic of the recorded pipe current and of the recorded switch-on potential over a predetermined period of time (t1, t2), and
evaluating (400c) the statistic of the recorded pipe current and the statistic of the recorded switch-on potential.

2. Method according to claim 1, wherein
the step of filtering (300a) the recorded pipe current and/or the recorded switch-on potential and/or the recorded structure-borne noise in each case by means of at least one band-pass filter (34a1-34a3; 34b1-34b3; 34c1-34c3) at least comprises:
filtering (310a) the recorded pipe current and/or the recorded switch-on potential and/or the recorded structure-borne noise in each case by means of a first band-pass filter (34a1; 34b1; 34c1) of a first passband, and
filtering (320a) the recorded pipe current and/or the recorded switch-on potential and/or the recorded structure-borne noise in each case by means of a second band-pass filter (34a2; 34b2; 34c2) of a second passband.

3. Method according to either claim 1 or claim 2, wherein
the step of evaluating (400a) the filtered recorded pipe current and/or the filtered recorded switch-on potential and/or the filtered recorded structure-borne noise at least comprises:
comparing (450a) the amplitude of the filtered recorded pipe current and/or of the filtered recorded switch-on potential and/or of the filtered recorded structure-borne noise with a predetermined amplitude in each case, and
detecting (480a) a contact in the form of a galvanic ground connection when the relevant predetermined amplitude is reached or exceeded.

4. Method according to any of the preceding claims, comprising, between the recording (100) and the filtering (300a), at least the additional step of:
filtering (200a) the recorded pipe current and/or the recorded switch-on potential and/or the recorded structure-borne noise in each case by means of at least one band-stop filter (31a; 31b; 31c) of which the stopband corresponds to the frequency range of a predetermined disturbance.

5. Method according to any of the preceding claims, comprising, between the recording (100) and the correlation (300b), at least the additional step of:
filtering (200a) the recorded pipe current and/or the recorded switch-on potential in each case by means of at least one band-stop filter (31a; 31b; 31c) of which the stopband corresponds to the frequency range of a predetermined disturbance.

6. Method according to any of the preceding claims, wherein
the step of creating (300c) at least one statistic of the recorded pipe current and/or of the recorded switch-on potential over the predetermined period of time (t1, t2) at least comprises:
creating (310c) at least one statistic of the recorded pipe current and/or of the recorded switch-on potential over a first predetermined period of time (t1), and
creating (320c) at least one statistic of the recorded pipe current and/or of the recorded switch-on potential over a second predetermined period of time (t2),
wherein the first predetermined period of time (t1) is shorter than the second predetermined period of time (t2).

7. Method according to any of the preceding claims, wherein
the step of evaluating (400c) the statistic of the recorded pipe current and/or the statistic of the recorded switch-on potential at least comprises:
determining (420c) the standard deviation of the recorded pipe current and/or of the recorded switch-on potential over the predetermined period of time (t1, t2),
comparing (450c) the determined standard deviation of the recorded pipe current and/or of the recorded switch-on potential with a predetermined standard deviation in each case, and detecting (480c) a contact in the form of a galvanic ground connection when the relevant predetermined standard deviation is reached or exceeded.

8. Method according to any of the preceding claims, comprising, between the recording (100) and the creation (300c), at least the additional step of:
filtering (200c) the recorded pipe current and/or the recorded switch-on potential in each case by means of at least one low-pass filter (32a; 32b).

9. Method according to any of the preceding claims, comprising, after the evaluation (400a, 400b, 400c), at least the additional step of:
evaluating (500), in a combined manner, at least two results, preferably all results, of the evaluation (400a) of a method according to claims 1 to 4, of the evaluation (400b) of a method according to claims 5 and 6, and of the evaluation (400c) of a method according to claims 7 to 10.

10. Method according to claim 9, wherein
the step of evaluating (500) at least two results, preferably all results, in a combined manner is carried out in a weighted manner.

11. Method according to any of the preceding claims, wherein
the evaluation (400a) of a method according to claims 1 to 4 and/or the evaluation (400b) of a method according to claims 5 and 6 and/or the evaluation (400c) of a method according to claims 7 to 10 and/or the combined evaluation (500) of a method according to claims 10 and 11 is carried out by means of an artificial intelligence unit (39a), preferably by means of a fuzzy logic unit (39a) or by means of an artificial neural network (39a).

12. Method according to any of the preceding claims, comprising, after the evaluation (400a, 400b, 400c), preferably after the combined evaluation (500), at least the additional step of:
outputting (600) a result of the evaluation (400a, 400b, 400c), preferably the combined evaluation (500),
wherein the outputting step (600) is preferably a step (600) of alerting a user.

13. Method according to any of the preceding claims, wherein
the step of recording (100) the time curve of the pipe current and/or of the switch-on potential and/or of the structure-borne noise of the object (4) at least comprises:
recording (120) the time curve of the pipe current and/or of the switch-on potential and/or of the structure-borne noise of the object (4) as an analog measured value, and
amplifying (150) the recorded analog pipe current and/or the recorded analog switch-on potential and/or the recorded analog structure-borne noise.

14. Method according to any of the preceding claims, wherein
the step of recording (100) the time curve of the pipe current and/or of the switch-on potential and/or of the structure-borne noise of the object (4) at least comprises:
recording (120) the time curve of the pipe current and/or of the switch-on potential and/or of the structure-borne noise of the object (4) as an analog measured value, and
converting (180) the recorded analog pipe current and/or the recorded analog switch-on potential and/or the recorded analog structure-borne noise into a digital measured value, preferably having a resolution of 24 bits.

15. Method according to any of the preceding claims, wherein
the step of recording (100) the time curve of the pipe current and/or of the switch-on potential and/or of the structure-borne noise of the object (4), preferably the step of converting (180) said time curve into a digital measured value, is carried out at a high frequency, preferably at at least 2 kHz.

16. Method according to any of the preceding claims, wherein
the step of filtering (200a, 200c, 310a, 320a) the pipe current and/or the switch-on potential and/or the structure-borne noise of the object (4) is carried out digitally, preferably by means of digital software filters.

17. Device (2) for monitoring an electrically conductive object (4) which is cathodically protected against corrosion, comprising at least one input (21) designed to receive a pipe current and at least one input (22) designed to receive a switch-on potential, and optionally at least one input (23) designed to receive a structure-borne noise, **characterized by** at least one control unit (26) designed to carry out at least one method according to the preceding claims.

18. Monitoring device (2) according to claim 17, wherein
at least one electric network connection (24), which is designed to supply power to the monitoring device (2) via an electric supply network, and/or at least one electric energy store (25), preferably a battery (25), which is designed to supply the monitoring device (2) with power, wherein the monitoring device (2) is designed to be operated via the electric network connection (24) and/or via the electric energy store (25).

19. Device (2) according to either claim 17 or claim 18, wherein
the monitoring device (2) is designed independently of a protective current device (1), or
the monitoring device (2) is designed as part of a protective current device (1).

## Revendications

1. Procédé permettant la surveillance d'un objet (4) électriquement conducteur et protégé contre la corrosion par protection cathodique, comprenant les étapes :
d'enregistrement (100) d'un profil temporel d'un courant de conduite et d'un potentiel d'enclenchement et éventuellement également d'un bruit de corps de l'objet (4),
de filtrage (300a) du courant de conduite enregistré et du potentiel d'enclenchement enregistré et éventuellement du bruit de corps enregistré au moyen, respectivement, d'au moins un filtre passe-bande (34a1-34a3 ; 34b1-34b3 ; 34c1-34c3) dont la bande passante correspond à la gamme de fréquences d'un contact sous la forme d'une connexion à la terre galvanique, et
d'évaluation (400a) du courant de conduite enregistré filtré et du potentiel d'enclenchement enregistré filtré et éventuellement du bruit de corps enregistré filtré,
de corrélation (300b) du courant de conduite enregistré avec le potentiel d'enclenchement enregistré, et
d'évaluation (400b) de la corrélation entre le courant de conduite enregistré et le potentiel d'enclenchement enregistré, et
de création (300c) d'au moins une statistique du courant de conduite enregistré et du potentiel d'enclenchement enregistré sur une période de temps prédéterminée (t1, t2), et
respectivement, d'évaluation (400c) de la statistique du courant de conduite enregistré et de la statistique du potentiel d'enclenchement enregistré.

2. Procédé selon la revendication 1, dans lequel
le filtrage (300a) du courant de conduite enregistré et/ou du potentiel d'enclenchement enregistré et/ou du bruit de corps enregistré au moyen, respectivement, d'au moins un filtre passe-bande (34a1-34a3 ; 34b1-34b3 ; 34c1-34c3) présente au moins :
le filtrage (310a) du courant de conduite enregistré et/ou du potentiel d'enclenchement enregistré et/ou du bruit de corps enregistré au moyen, respectivement, d'un premier filtre passe-bande (34a1 ; 34b1 ; 34c1) comportant une première bande passante, et
le filtrage (320a) du courant de conduite enregistré et/ou du potentiel d'enclenchement enregistré et/ou du bruit de corps enregistré au moyen, respectivement, d'un second filtre passe-bande (34a2 ; 34b2 ; 34c2) comportant une seconde bande passante.

3. Procédé selon la revendication 1 ou 2, dans lequel
l'évaluation (400a) du courant de conduite enregistré filtré et/ou du potentiel d'enclenchement enregistré filtré et/ou du bruit de corps enregistré filtré présente au moins :
respectivement, la comparaison (450a) de l'amplitude du courant de conduite enregistré filtré et/ou du potentiel d'enclenchement enregistré filtré et/ou du bruit de corps enregistré filtré avec une amplitude prédéterminée respective, et
la détection (480a) d'un contact sous la forme d'une connexion à la terre galvanique lorsque l'amplitude prédéterminée respective est atteinte ou dépassée.

4. Procédé selon l'une des revendications précédentes, comportant au moins l'étape supplémentaire, entre l'enregistrement (100) et le filtrage (300a) :
de filtrage (200a) du courant de conduite enregistré et/ou du potentiel d'enclenchement enregistré et/ou du bruit de corps enregistré au moyen, respectivement, d'au moins un filtre coupe-bande (31a ; 31b ; 31c) dont la gamme de blocage correspond à la gamme de fréquences d'une perturbation prédéterminée.

5. Procédé selon l'une des revendications précédentes, comportant au moins l'étape supplémentaire, entre l'enregistrement (100) et la corrélation (300b) :
de filtrage (200a) du courant de conduite enregistré et/ou du potentiel d'enclenchement enregistré au moyen, respectivement, d'au moins un filtre coupe-bande (31a ; 31b ; 31c) dont la gamme de blocage correspond à la gamme de fréquences d'une perturbation prédéterminée.

6. Procédé selon l'une des revendications précédentes, dans lequel
la création (300c) d'au moins une statistique du courant de conduite enregistré et/ou du potentiel d'enclenchement enregistré sur la période de temps prédéterminée (t1, t2) présente au moins :
la création (310c) d'au moins une statistique du courant de conduite enregistré et/ou du potentiel d'enclenchement enregistré sur une première période de temps prédéterminée (t1), et
la création (320c) d'au moins une statistique du courant de conduite enregistré et/ou du potentiel d'enclenchement enregistré sur une seconde période de temps prédéterminée (t2),
dans lequel la première période de temps prédéterminée (t1) est plus courte que la seconde période de temps prédéterminée (t2).

7. Procédé selon l'une des revendications précédentes, dans lequel
l'évaluation (400c) de la statistique du courant de conduite enregistré et/ou de la statistique du potentiel d'enclenchement enregistré présente au moins :
respectivement, la détermination (420c) de l'écart type du courant de conduite enregistré et/ou du potentiel d'enclenchement enregistré sur la période de temps prédéterminée (t1, t2),
la comparaison (450c) de l'écart type déterminé du courant de conduite enregistré et/ou du potentiel d'enclenchement enregistré avec un écart type prédéterminé respectif, et
la détection (480c) d'un contact sous la forme d'une connexion à la terre galvanique lorsque l'écart type prédéterminé respectif est atteint ou dépassé.

8. Procédé selon l'une des revendications précédentes, comportant au moins l'étape supplémentaire, entre l'enregistrement (100) et la création (300c) :
de filtrage (200c) du courant de conduite enregistré et/ou du potentiel d'enclenchement enregistré au moyen, respectivement, d'au moins un filtre passe-bas (32a ; 32b).

9. Procédé selon l'une des revendications précédentes, comportant au moins l'étape supplémentaire, après l'évaluation (400a, 400b, 400c) :
d'évaluation combinée (500) d'au moins deux résultats, de préférence de tous les résultats, de l'évaluation (400a) d'un procédé selon les revendications 1 à 4, de l'évaluation (400b) d'un procédé selon les revendications 5 et 6 et de l'évaluation (400c) d'un procédé selon les revendications 7 à 10.

10. Procédé selon la revendication 9, dans lequel
l'évaluation combinée (500) d'au moins deux résultats, de préférence de tous les résultats, est pondérée.

11. Procédé selon l'une des revendications précédentes, dans lequel
l'évaluation (400a) d'un procédé selon les revendications 1 à 4 et/ou l'évaluation (400b) d'un procédé selon les revendications 5 et 6 et/ou l'évaluation (400c) d'un procédé selon les revendications 7 à 10 et/ou l'évaluation combinée (500) d'un procédé selon les revendications 10 et 11 s'effectuent au moyen d'une intelligence artificielle (39a), de préférence au moyen d'une logique floue (39a) ou au moyen d'un réseau de neurones artificiel (39a).

12. Procédé selon l'une des revendications précédentes, comportant au moins l'étape supplémentaire, après l'évaluation (400a, 400b, 400c), de préférence après l'évaluation combinée (500) :
de sortie (600) d'un résultat de l'évaluation (400a, 400b, 400c), de préférence de l'évaluation combinée (500),
dans lequel la sortie (600) s'effectue de préférence sous la forme d'une alarme (600) pour un utilisateur.

13. Procédé selon l'une des revendications précédentes, dans lequel
l'enregistrement (100) du profil temporel du courant de conduite et/ou du potentiel d'enclenchement et/ou du bruit de corps de l'objet (4) présente au moins :
l'enregistrement (120) du profil temporel du courant de conduite et/ou du potentiel d'enclenchement et/ou du bruit de corps de l'objet (4) en tant que valeur de mesure analogique, et
l'amplification (150) du courant de conduite analogique enregistré et/ou du potentiel d'enclenchement analogique enregistré et/ou du bruit de corps analogique enregistré.

14. Procédé selon l'une des revendications précédentes, dans lequel
l'enregistrement (100) du profil temporel du courant de conduite et/ou du potentiel d'enclenchement et/ou du bruit de corps de l'objet (4) présente au moins :
l'enregistrement (120) du profil temporel du courant de conduite et/ou du potentiel d'enclenchement et/ou du bruit de corps de l'objet (4) en tant que valeur de mesure analogique, et
la conversion (180) du courant de conduite analogique enregistré et/ou du potentiel d'enclenchement analogique enregistré et/ou du bruit de corps analogique enregistré en une valeur de mesure numérique, de préférence avec une résolution de 24 bits.

15. Procédé selon l'une des revendications précédentes, dans lequel
l'enregistrement (100) du profil temporel du courant de conduite et/ou du potentiel d'enclenchement et/ou du bruit de corps de l'objet (4), de préférence leur conversion (180) en une valeur de mesure numérique, s'effectue à haute fréquence, de préférence à au moins 2 kHz.

16. Procédé selon l'une des revendications précédentes, dans lequel
le filtrage (200a, 200c, 310a, 320a) du courant de conduite et/ou du potentiel d'enclenchement et/ou du bruit de corps de l'objet (4) s'effectue numériquement, de préférence au moyen de filtres logiciels numériques.

17. Dispositif de surveillance (2) d'un objet (4) électriquement conducteur et protégé contre la corrosion par protection cathodique, comprenant au moins une entrée (21) configurée pour recevoir un courant de conduite, et au moins une entrée (22) configurée pour recevoir un potentiel d'enclenchement, et éventuellement au moins une entrée (23) configurée pour recevoir un bruit de corps, et **caractérisé par** au moins une unité de commande (26) configurée pour exécuter au moins un procédé selon les revendications précédentes.

18. Dispositif de surveillance (2) selon la revendication 17, dans lequel
au moins une connexion au réseau électrique (24), laquelle est configurée pour alimenter le dispositif de surveillance (2) par l'intermédiaire d'un réseau d'alimentation électrique, et/ou au moins un accumulateur d'énergie électrique (25), de préférence une batterie (25), lequel est configuré pour alimenter le dispositif de surveillance (2),
dans lequel le dispositif de surveillance (2) est configuré pour être actionné par l'intermédiaire de la connexion au réseau électrique (24) et/ou par l'intermédiaire de l'accumulateur d'énergie électrique (25).

19. Dispositif (2) selon la revendication 17 ou 18, dans lequel
le dispositif de surveillance (2) est conçu indépendamment d'un dispositif de courant de protection (1), ou
le dispositif de surveillance (2) est conçu comme partie d'un dispositif de courant de protection (1).
